(19) **Europäisches Patentamt**
**European Patent Office**
**Office européen des brevets**

(11) **EP 4 411 074 A1**

(12) **EUROPEAN PATENT APPLICATION**
published in accordance with Art. 153(4) EPC

(43) Date of publication:
**07.08.2024 Bulletin 2024/32**

(21) Application number: **22875235.8**

(22) Date of filing: **18.07.2022**

(51) International Patent Classification (IPC):
*E02D 27/42* (2006.01)   *B63B 21/50* (2006.01)
*B63B 21/20* (2006.01)   *B63B 35/44* (2006.01)
*F03D 13/25* (2016.01)   *B63B 39/00* (2006.01)

(52) Cooperative Patent Classification (CPC):
**B63B 21/20; B63B 21/50; B63B 35/44;**
**B63B 39/00; E02D 27/42; F03D 13/25**

(86) International application number:
**PCT/ES2022/070466**

(87) International publication number:
**WO 2023/052658 (06.04.2023 Gazette 2023/14)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **03.10.2021 ES 202130922**

(71) Applicant: **GAZELLE WIND POWER LIMITED**
**D04 TR29 Dublin (IE)**

(72) Inventor: **GARCÍA FERRÁNDEZ, Antonio Luís**
**28224 Pozuelo de Alarcón (Madrid) (ES)**

(74) Representative: **Elzaburu S.L.P.**
**Edificio Torre de Cristal**
**Paseo de la Castellana 259 C, planta 28**
**28046 Madrid (ES)**

(54) **MOORING SYSTEM**

(57) Anchoring system for floating platform (100) that eliminates pitching and rolling movements of the floating platform (100), by means of several anchoring lines (200) attached to the seabed (5), which are supported by several rotary fixing means (2, 3) or pulleys of the floating platform (100) and are all joined together in a common counterweight (1) hanging from the platform (100). Each anchoring line (200) comprises sublines (200d, 200c) (direct, crossover or diagonal), which keep the counterweight (1) always in correspondence with the central axis (300) of the floating platform (100). It also eliminates the pendulum movement of the counterweight (1) and is valid for floating platforms (100) with an odd number of protruding structural arms (12). The system is applicable to any type of floating platform (100), although it is particularly suitable for floating platforms that support offshore wind turbines and marine leisure platforms.

FIG. 4

EP 4 411 074 A1

**Description**

**Purpose of the invention**

The present invention has as its object an anchoring system especially suitable for floating platforms that serve as a base for wind turbines located at sea, although it can also be used for floating platforms intended to support leisure or recreational structures or installations. The anchoring system object of the present invention comprises a set of anchoring cables or chains (anchoring lines) fastened to piles buried in the seabed or to weights located or deposited on the seabed.

The anchoring system object of the present invention has unique characteristics that make it suitable to be used on floating platforms that serve as a basis for maritime structures where it is important to avoid pitching or rolling movement, as well as solving some drawbacks of other anchoring systems for floating platforms of the state of the art.

The anchoring system object of the present invention is applicable to any type of structure intended to be located floating on the surface of the sea, and which needs to have several anchoring points on the seabed, to fasten the cables or anchoring chains of the floating platforms.

**Background of invention and technical problem to be solved**

Floating platforms, especially those dedicated to supporting wind turbines for the generation of electrical energy from offshore wind energy, need anchoring systems that keep them in their position and contribute to their stability.

In the state of the art, platforms of the Tension Leg Platform (TLP) type are known. These platforms comprise three or more anchoring lines (usually chains or cables that connect the platform with piles anchored to the seabed). The anchoring lines of TLP platforms are designed to be disposed in tension, connecting the platform in an upright position to each of the piles anchored on the seabed. TLP platforms comprise a set of floats designed to produce an excess buoyancy of the platform (taking into account the weight of the structure that sits on the platform). This excess buoyancy ensures a high level of tension in the cables, which in turn ensures that they are always upright. In this way, the pitching and rolling movements of the platform and the structure that sits on the platform are avoided.

EP 2743170 A1 describes a TLP platform as described in the previous paragraph.

A disadvantage of TLP platforms is that the high tension of the cables necessary to keep them in vertical position and thus avoid pitching and/or rolling movements also results in blocking movement in the vertical direction of the platform. Thus, when the tide rises, the platform cannot move upwards (due to the fact that the anchoring lines have reduced or no extensibility) and, therefore, the tension in the anchoring lines increases considerably. This causes a high risk of breakage of the anchoring lines and requires having high-section anchoring lines or increasing the number of anchoring lines. Additionally, in TLP platforms, in very low tide situations, the platform also descends (the cables cannot work in compression) and the anchoring lines can lose much of their tension, increasing the risk that the platform moves both vertically and laterally in an uncontrolled manner, and also increasing the risk that pitching and/or rolling movements occur (due to the thrust of the wind and/or waves on the platform and the structure that sits on it) that can result in the overturning of the platform.

Another type of floating platforms are semi-submersible platforms. If the platform requires large living areas, semi-submersible platforms, which have acceptable wave behaviour and large free areas, are often used. They are suitable for mild to medium sea conditions. When more severe sea states are expected, larger and heavier platforms that move less than smaller ones are used. In any case, semi-submersible platforms do not prevent pitch/roll movement, they only reduce it.

Another type of floating platforms are the so-called SPAR platforms. They are floating platforms on which stability is obtained by placing large weights at great depth. They usually use conventional anchoring systems with chains and anchors; their shape is usually cylindrical, of small diameter and great length. They are used almost exclusively as wind turbine bases and their pitch angles are significantly greater than in other types of platforms. They are particularly sensitive to wind buoyancy and are less affected by the presence of waves.

To avoid the above mentioned drawbacks of TLP platforms, other types of floating platforms are known where the anchoring lines are connected to a counterweight through pulleys located on the platform. These types of platforms allow the vertical and lateral displacement of the platform in the face of tides, waves and wind, thus making it unnecessary to have a large number of anchoring lines or anchoring lines of a high section.

Document ES 2629867 A2 describes a platform as described in the previous paragraph.

A problem with the anchoring system described in the document mentioned in the previous paragraph is that the platforms that use this anchoring system are subjected to pitching and/or rolling movements, and the counterweight they use is subjected to constant pendulum movements that can be significant and can cause fatigue problems in the cables, which means that the anchoring system described in this document is not optimal for:

- applications where there are persons likely to become seasick with the movements of the platform (i.e. other than marine professionals), such as young children, tourists, scientists, guests and visitors in general;

- floating platforms on which offshore marine wind turbines are installed, where it is important to avoid rolling and/or excessive pitching of the platform;

- applications in which the equipment installed and the activity to which it is dedicated (laboratories, research centres, factories) require that the movements and accelerations of the platform are small;

- floating platforms that may be subjected (at some point) to extremely severe storms, that could endanger the safety of the same structure or that may overturn it (if the pitching movements were very large).

- especially on platforms that are to be installed in series (in large quantities) and where cable maintenance costs can be a significant part of the total costs (if the cables have to be inspected, and perhaps replaced due to fatigue every two years, in a 200-unit wind farm, the platform is no longer economically profitable).

To solve the above problems, a type of platform as described in the international application document PCT/IB2022/000334 is also known. This type of floating platform always comprises an even number of anchoring lines. If pitching and rolling movements are to be eliminated on floating platforms with overhanging structural arms, a minimum number of four overhanging structural arms is always required, which entails considerable cost for the manufacture and installation of the floating platform (installation is complicated by the need for extreme precision in the positioning of bottom weights, and requires very sophisticated vessels and equipment).

**Disclosure of the invention**

In order to remedy the aforementioned drawbacks, the present invention relates to an anchoring system.
The anchoring system object of the present invention comprises a floating platform and at least three anchoring lines, configured to fix or anchor the floating platform to the seabed by means of at least one bottom section of each anchoring line. Each anchoring line also comprises a central section attached to a counterweight.
The anchoring system comprises at least one first rotary fixing means (also referred to as a direct pulley) for each anchoring line, wherein each first rotary fixing means (or outer pulley) is attached to a first point of the floating platform and is configured to attach each anchoring line to the floating platform at said first point of the floating platform, allowing the anchoring line to slide along said first rotary fixing means.
Each anchoring line comprises at least a first subline and a second subline, each comprising its own anchoring cable or chain.
The floating platform comprises a central axis (this may be a central axis of symmetry or a vertical axis passing through a centre of gravity of the platform and/or counterweight) which defines, together with the bottom section of each anchoring line, an anchoring plane of each anchoring line.
The system comprises at least a second rotary fixing means (also called a crossover pulley) for each anchoring line. This at least one second rotary fixing means of each mooring line is attached to a second point of the floating platform and is configured to attach at least one mooring subline of each mooring line to the floating platform at said second point of the floating platform allowing said subline to slide along said second rotary fixing means, in such a way that said subline comprises an intermediate section between the first rotary fixing means and the second rotary fixing means and wherein said subline runs from the first rotary fixing means to the counterweight passing and sliding through the second rotary fixing means.
Novelly, in the anchoring system of the present invention, the at least one second rotary fixing means of each mooring line is not contained in the anchoring plane of said mooring line.
Except in the fifth embodiment, the first subline of each mooring line can also be called a "direct subline", since it runs from the first rotary fixing means directly towards the counterweight (although it can optionally pass through a third rotary fixing means in the plane of the anchoring plane of the said mooring line).
The second mooring subline is, in all embodiments of the invention, a crossover subline or a diagonal subline, depending on the embodiment.
The second subline is the second subline, the intermediate section of which runs from the first rotary fixing means to the second rotary fixing means, passing through a position close to the central axis of the floating platform.
A diagonal subline is a second subline, the intermediate section of which runs from the first rotary fixing means to the second rotary fixing means without passing through a position close to the centre line of the floating platform.
By means of the anchoring system described above, the pitch and/or roll of the floating platform is cancelled or drastically reduced with respect to other anchoring systems such as that described in document ES 2629867 A2, while leaving the floating platform free to move vertically, also allowing restricted horizontal movements.

Additionally, by means of the anchoring system described above, the pendular movement characteristic of the central counterweight, induced by the horizontal movements of the platform due to the waves, is eliminated.

Likewise, by means of the anchoring system described above, the need to have a central well in the hull (main structure or central structure) of the platform is eliminated, which in the state of the art was necessary for the passage of the central sections of the anchoring lines (those that hold the central counterweight).

By means of the anchoring system described above, it is possible to minimise or nullify the pitching and rolling movements of a floating platform, and it is also possible to use floating platforms comprising up to a minimum of three overhanging structural arms, or a generic odd or even number of overhanging structural arms supporting the anchoring lines.

In this way, it is possible to construct floating platforms with protruding structural arms comprising only three protruding structural arms, which was impossible in previous anchoring systems (such as the one described in international application PCT/IB2022/000334), which required a minimum of four protruding structural arms. This reduces the cost of manufacturing and installing the floating platform (a platform with only three anchor points on the bottom needs much less installation precision than one with four, and does not require special equipment for installation).

This is achieved thanks to the crossover and/or diagonal sublines, which allow the stresses of the anchoring lines to be distributed in different planes, making it possible to achieve a balance of forces that cancel out the pitching and rolling movements of the platform with only three anchoring planes (three anchoring lines).

Except in the fifth proposed embodiment, the first subline (direct subline) of each anchoring line is entirely within the anchoring plane of said anchoring line and the at least one first rotary fixing means of each anchoring line is fixed to the floating platform in correspondence with a first point located at a periphery of the floating platform.

In addition to the above, the at least one second rotary fixing means (crossover pulley) is fixed to the floating platform at the second point which is preferably also located on the periphery of the floating platform.

According to the second and fourth embodiments of the invention, for each anchoring line, the intermediate section of the second subline (crossover subline) runs between the first rotary fixing means and the second rotary fixing means passing through at least one rotary guiding means located in proximity to the central axis of the floating platform.

As a continuation of the previous paragraph, optionally, the intermediate section of the second subline (crossover subline) runs between the first rotary fixing means and the second rotary fixing means passing through at least two rotary fixing means located in proximity to the central axis of the floating platform.

In the case of the second proposed embodiment, the intermediate section of the second subline (crossover subline) passes through two rotating guide means located in proximity to the central axis of the floating platform.

In the case of the fourth proposed embodiment, the intermediate section of the second subline (crossover subline) passes through a single rotating means of guidance located in proximity to the central axis of the floating platform.

According to the first proposed embodiment of the anchoring system, for each anchoring line, the intermediate section of the second subline (diagonal subline) runs between the first rotary fixing means and the second rotary fixing means in a straight line.

According to the third proposed embodiment of the anchoring system, for each anchoring line, the intermediate section of the second subline (diagonal subline) runs between the first rotary fixing means and the second rotary fixing means passing through at least one rotary guiding means located in correspondence with the periphery of the floating platform.

The rotary guiding means (or in plural), in those embodiments in which it is present, is attached to at least a fourth point of the floating platform and is configured to guide the course of the corresponding sub-line of each anchoring line by allowing said sub-line to slide along said rotary guiding means, such that said sub-line runs between the first rotary fixing means and the second rotary fixing means passing through and sliding along the rotary guiding means.

The rotary guiding means enable the corresponding subline to avoid obstacles on its way from the first rotary fixing means to the second rotary fixing means. By means of this rotary guiding means, the sublines of all anchoring lines can be prevented from colliding with each other, or the sublines can be prevented from colliding with the main structure of the floating platform. It can also be achieved by means of the rotary guiding means that the sublines run along a particular route, for example following the contour, perimeter or periphery of the floating platform.

Preferably, in any of the proposed embodiments, the at least one second rotary fixing means of each anchoring line is attached to the floating platform at a point in proximity to the first rotary fixing means of an adjacent anchoring line.

As mentioned above, with the exception of the fifth proposed embodiment, the first subline (direct subline) of each anchoring line lies entirely within the anchoring plane of that anchoring line. In this situation, as also discussed above, the anchoring system may comprise at least one third rotary fixing means (direct inner sheave) per anchoring line, wherein each third rotary fixing means is attached to a third point of the floating platform and is configured to attach the first subline (direct subline) to the floating platform at said third point of the floating platform allowing the first subline to slide along said third rotary fixing means, in such a way that each first subline (direct subline) runs from the first rotary fixing means (outer pulley) to the counterweight passing through and sliding over the third rotary fixing means (direct inner pulley).

According to the fifth proposed embodiment, the anchoring system comprises a second rotary fixing means (crossover pulley) for each anchoring subline of each anchoring line, such that both the first subline and the second subline respectively comprise an intermediate section between the first rotary fixing means and the corresponding second rotary fixing means and wherein each anchoring subline runs from the first rotary fixing means to the counterweight by sliding through the corresponding second rotary fixing means.

In this fifth embodiment, neither the first subline nor the second subline are direct sublines. Both sublines are diagonal sublines.

Preferably, in the fifth embodiment, the intermediate section of each subline runs between the first rotary fixing means and the second rotary fixing means in a straight line.

According to an aspect of the invention, the counterweight comprises at least one floodable chamber. This feature also facilitates the transport of the counterweight (which can be transported without flooding with less weight), and also facilitates a progressive contribution of tension to the anchoring lines, as the at least one floodable flotation chamber is filled.

According to another aspect of the invention, each bottom section of each anchoring line comprises a buoy that divides the bottom section into a first portion that runs between the seabed and the buoy and a second portion that runs between the buoy and the at least one first rotary fixing means.

The above feature facilitates the installation of the floating platform, since the bottom weight, pile or anchoring ring attached to a first portion of the bottom section (with the buoy) can be arranged in a pre-installation manoeuvre (once the location of the floating platform has been chosen) and, subsequently, connect the second portion of the bottom section directly to the buoy, when the floating platform and the counterweight have moved to the installation site.

According to some embodiments of the invention (preferably in the case of floating platforms intended to support offshore wind turbines), the floating platform comprises as many protruding structural arms as there are anchoring lines, wherein each protruding structural arm is attached to a main structure (or hull) of the floating platform, wherein each protruding structural arm runs radially from a first end attached to the main structure of the floating platform to a second end protruding outwardly from the floating platform, wherein the at least one first rotary fixing mean of each anchoring line is attached to the floating platform in correspondence with the second end of a first arm, and wherein the at least one second rotary fixing mean is attached to the floating platform at a point located in correspondence with a second arm. Preferably the at least one second rotary fixing means is fixed to the floating platform at a point located in correspondence with the second end of the second arm.

According to these embodiments mentioned in the preceding paragraph, the main structure (or hull) of the floating platform preferably comprises a cylindrical, conical or pyramidal shaft geometry.

In addition to the above, the anchoring system may comprise a plurality of spokes connected to the main structure, where at each free end of each spoke there is a flotation element. These flotation elements may comprise at least one flood chamber.

Also additionally, according to the embodiments discussed in the three preceding paragraphs, the main structure of the floating platform may comprise at least one flotation element which in turn may comprise at least one floodable chamber.

The flotation elements provide buoyancy and, when floodable, allow the floating platform to be moved or towed to its installation site or location with a reduced weight and subsequently flood the corresponding flotation elements to adjust the final draught of the platform to its design value.

When the flotation elements are located at the end of spokes attached to the shaft, the structure is particularly stable, and appropriate to guarantee the stability of the floating platform in the installation maneuver.

Finally, there are embodiments in which the anchoring system is used with floating platforms intended for leisure or recreational use.

As discussed in the preceding paragraph, the floating platform may comprise a main structure with three decks, wherein rotary fixing means and rotary guiding means are attached to the floating platform at points below a first deck. The main structure comprises six columns protruding below the floating platform under the first deck and configured to be partially submerged. These six columns cross a second deck and a third deck. Three of the six columns are projected above the third deck upwards from the floating platform, on an upper deck.

The second deck comprises a glazed perimeter surface that can be folded and unfolded, with a perimeter annular balcony that projects beyond the glazed perimeter surface.

A vaulted upper enclosure (with a glass vault) projects above the third deck in correspondence with the centre of the third deck.

A lower enclosure projects below the first deck in correspondence with the centre of the first deck.

Thus, the present invention relates to an improvement in the anchoring system that constitutes the international application PCT/IB2022/000334, applicable to all types of marine floating platforms, which allows the movement of the same, both in horizontal and vertical direction, but which completely cancels the pitching movement and the rocking movement of the platform. As in that patent application, the pendulum movement of the central counterweight is also eliminated.

By its very philosophy, the invention contained in international application PCT/IB2022/000334 is only applicable to platforms with an even number of arms, since there must be two groups of pulleys and cables facing each other (symmetrically). The problem is that nowadays wind platforms usually have three arms (with their corresponding anchoring lines), i.e. the system proposed there cannot be applied.

The specific object of the present invention is to adapt the system described in international application PCT/IB2022/000334 to be applicable to platforms with any number of protruding structural arms (especially for platforms with three protruding structural arms (with their corresponding anchoring lines)).

The fact that the floating platform on which this anchoring system is installed has no pitching or rolling movements (even in large waves) makes it particularly suitable for the following installations:

- In applications where there are persons likely to become seasick with the movements of the platform (i.e. other than marine professionals), such as young children, tourists, scientists, guests and visitors in general;

- On which offshore wind turbines are installed. This use has been enhanced in the present patent application, with a new preferred application, referring to platforms for floating offshore wind turbines;

- In applications in which the equipment installed and the activity to which it is dedicated (laboratories, research centres, factories) require that the movements and accelerations of the platform are small;

- In those installations that may be subjected (at some point) to extremely severe storms, which could endanger the safety of the structure itself or could even overturn it (if its pitching movements were very large).

As in the previous version, the floating platform on which this new type of anchoring is installed does not need to rest on the seabed, and therefore it is suitable for areas of any marine depth, both close to the coast (70 m deep) and far from it (up to depths of 400 m or more) and at any intermediate distance, as it is capable of withstanding very severe storms.

Thus, the anchoring system of the present invention is applicable to any floating marine installation, where movement requirements are an important design constraint. Especially for the following cases:

- Tourism, marine leisure and nautical sports; a platform designed with this type of anchorage is ideal for the hotel and recreation industry, since most of the potential clients of this type of facility are not expert sailors and the fact that it moves very little is a great attraction. A hotel can be installed in offshore waters more than 10 nautical miles from the coast, so it could have facilities for rest, recreation, casino and gambling halls, theme parks or any type of facilities for which an equivalent facility on land could encounter impediments of an urbanistic nature or have difficulties in obtaining the opening permits or have problems with the municipal regulations in force. Being far from the coast, the depth of the sea is greater and it is not possible to rest the hotel on the seabed. In addition, the waves are higher, and therefore a conventional platform would move too much for this application.

- Wind farms. Windmills need a base that moves as little as possible, in fact, once a certain level of inclination (pitch) or a certain level of acceleration is exceeded, the wind turbines must be stopped for safety reasons. The fact that it moves less than current ones increases the profitability of the installation, by having more net hours per year to generate electricity. In fact, the main preferred embodiment presented in this patent application (the second embodiment, corresponding to Figure 14, Figure 15, Figure 22, Figure 23 and Figure 24), refers to a floating platform specifically designed as a support for offshore wind turbines.

Thus, the present invention is intended to solve a problem inherent to all floating structures. These floating structures or platforms, due to waves or wind, have pitching or rolling movements, which are detrimental to their operation, annoying for the personnel on board and may endanger the safety of people and structures.

This invention makes it possible to cancel such movements, leaving it free to move vertically; it also allows horizontal movements in a restricted way (like conventional anchoring systems using chains).

With respect to other known anchoring systems, the anchoring system object of the present invention presents several advantageous features.

- It can be applied to any type of platform, especially for windmills and platforms dedicated to maritime leisure activities;

- It totally prevents pitch and roll movement of the platform, but allows any horizontal or vertical movement.

- It does not need foundations, nor special preparation of the seabed (conventional foundations can be used that are simpler than usual ones);

- The optimal draughts are between 70m and 400m, but it can reach greater depths;

- It can be installed or relocated (as many times as desired) without the need for special ships, using only a tugboat to move it;

- The forces on the anchoring lines are lower than on TLP type platforms; if one line breaks, it continues to work with the others. It can be repaired/replaced on site.

- It allows designing platforms that are much lighter (and therefore cheaper) and with reduced strut (resulting in less visual impact);

## Brief description of the figures

As part of the explanation of at least one embodiment of the invention, the following figures have been included, by way of illustration and in a non-limiting manner.

Figure 1: Shows a front schematic view of the anchoring system described in international application PCT/IB2022/000334, where two anchoring lines (arranged in the same plane) are observed, in a rest position, according to a possible embodiment of said anchoring system.

Figure 2: Shows a detail view of a single anchoring line of the anchoring system of Figure 1, where it can be seen that the two sublines of the anchoring line are integrally contained in a single anchoring plane.

Figure 3: Shows a view, analogous to that of Figure 2, but in this case according to a possible embodiment of the anchoring system object of the present invention. The two sublines of an anchoring line are shown, and it can be seen that part of the intermediate section of one subline does not lie within the anchoring plane of the anchoring line.

Figure 4: Shows a view, analogous to that of Figure 1, but in this case according to a possible embodiment of the anchoring system object of the present invention. Only two contiguous or adjacent anchoring lines of a three anchoring line anchoring system are shown. A complete anchoring line with its two sublines can be seen, and it can be observed that part of the intermediate section of a subline is not included in the anchoring plane of said anchoring line.

Figure 5: Shows a schematic view of an anchoring system according to Figure 4, where the three anchoring lines of the anchoring system are observed.

Figure 6: Shows a schematic view of the theoretical displacement of two central anchoring lines, in a counterbalanced anchoring system according to the state of the art.

Figure 7: Shows a diagram of the forces acting on a structure employing the anchoring system object of the present invention. The force diagram has been plotted in the same plane (although the two anchoring lines are actually in two different planes).

Figure 8: Shows a schematic view similar to that of Figure 1, where the buoys of the bottom sections of the anchoring lines have been suppressed.

Figure 9: Shows a schematic view of the anchoring system of Figure 8, wherein said anchoring system has been displaced horizontally and vertically by the effect of waves and wind.

Figure 10: Displays a schematic view of the displacement of an anchoring system in which the bottom sections of diametrically opposed anchoring lines are parallel.

Figure 11: Displays a schematic view of the displacement of an anchoring system in which the bottom sections of diametrically opposed anchoring lines are divergent.

Figure 12: Shows a schematic perspective view of a first embodiment of the anchoring system of the present invention.

Figure 13: Shows a schematic plan view of the anchoring system of Figure 12.

Figure 14: Shows a schematic perspective view of a second embodiment of the anchoring system of the present invention.

Figure 15: Shows a schematic plan view of the anchoring system of Figure 14.

Figure 16: Shows a schematic perspective view of a third embodiment of the anchoring system of the present invention is shown.

Figure 17: Shows a schematic plan view of the anchoring system of Figure 16.

Figure 18: Shows a schematic perspective view of a fourth embodiment of the anchoring system of the present invention.

Figure 19: Shows a schematic plan view of the anchoring system of Figure 18.

Figure 20: Shows a schematic perspective view of a fifth embodiment of the anchoring system of the present invention.

Figure 21: Shows a schematic plan view of the anchoring system of Figure 20.

Figure 22: Shows a schematic front view of a floating platform according to the second embodiment of the anchoring system according to the present invention, showing a floating platform comprising a main structure in the form of a cylindrical-conical shaft with three protruding structural arms supporting three anchoring lines, and wherein the main structure of the floating platform comprises three spokes connected to said main structure, each of the spokes comprising a flotation element at its end.

Figure 23: Displays a perspective view of the anchoring system of Figure 22.

Figure 24: Shows a schematic profile view of the anchoring system of Figure 22 and Figure 23.

Figure 25: Shows a schematic top perspective view of a floating platform intended for a recreational and/or leisure facility.

Figure 26: Shows a front schematic view of the floating platform of Figure 25, wherein said floating platform is used with an anchoring system according to the third embodiment shown in Figure 16 and Figure 17.

Figure 27: Shows a schematic bottom perspective view of the floating platform of Figure 26.

Figure 28: Shows a schematic view in a lower perspective, analogous to Figure 27, but where the floating platform is used with an anchoring system according to the fourth embodiment shown in Figure 18 and Figure 19.

## Detailed Description

The present invention relates, as mentioned above, to an anchoring system comprising a floating platform (100).

Some elements cited in this description are defined below.

Float or flotation element (500): a closed and watertight wrapper, totally or partially submerged in water, which can be subjected to hydrostatic or hydrodynamic forces due to waves or sea currents. If it is partially submerged, it can also be subjected to forces originating from the wind on its side or superstructures.

Hull or main structure (400): is one or more watertight floats or flotation elements (500) forming a rigid and strong unit, at least one of which is partially submerged.

Floating platform (100): is a hull or main structure (400) of any shape or configuration, with several additional elements or structures, dedicated to any function (accommodation, industrial or recreational facilities, support for windmills, etc.), equipped with the anchoring system proposed herein.

External agents: wind, sea currents, waves, internal load movements or any element outside the floating platform (100) that attempts to move it away from its design position or attempts to cause it to pitch or roll.

Tension of the cable or anchoring line (200): the tensile force to which the cable or anchoring line (200) is subjected (due to its flexible nature, the cable or anchoring line (200) cannot be subjected to compressive forces).

Central counterweight (1): a fully submerged hull, of average density greater than 1.8 kg/dm$^3$, which keeps the anchoring lines (200) that are connected to it taut. In simple installations such as those presented here, there is only one counterweight (1) located on the central axis (300) of the floating platform (100). Anchor block or bottom weight (4): a (large) weight supported on the seabed (5), to which the cables or anchoring lines (200) of the anchoring system are attached. In other conventional installations, it is equivalent to the anchor, to the 'deadweight' that keeps buoys or other marine elements in their position or to any other type of anchorage by means of piles.

Anchor cable or anchoring line (200): a cable, chain or tie of any type that keeps the floating platform (100) attached to the bottom weight (4), preventing the floating platform (100) from being dragged by external agents. It is composed of the following elements:

- Bottom section (8): the part of the anchoring line (200) that joins the bottom weight (4) with the first rotary fixing means (3) (or external pulley) of the anchoring line (200). In most applications, in the projected conditions the bottom section (8) is completely vertical, although in special cases it may be slightly divergent. In some cases it can be in a single piece reaching the seabed (5); in other cases, the bottom leg (8) is split or divided into a first portion (bottom portion) and a second portion (top portion), and both portions (top and bottom) are joined together by an intermediate buoy (9).

- Intermediate section (7): the part of the anchoring line (200) that joins the outer pulley (the first rotary fixing means (3)) with the inner pulley or pulleys (the second rotary fixing means (2c) (or crossover pulley) and, eventually, the third rotary fixing means (2d)) that hold the cable; it can be horizontal or it can have a slight slope (if the pulleys are not at the same height).

More specifically, as will be seen below, the anchoring line (200) comprises a first subline (200d) and a second subline (200c). The intermediate section (7) is that part of the second subline (200c) of the anchoring line (200) which connects the first rotary fixing means (3) (or outer pulley) to the second rotary fixing means (2c) (or crossover pulley). If necessary, as in the case of the fifth proposed embodiment, the first subline (200d) also comprises an intermediate section (7) located between the first rotary fixing means (3) and the second rotary fixing means (2c).

In addition, in the case of a third rotary fixing means (2d) (or internal pulley), the intermediate section (7) also refers to the part of the first subline (200d) of the anchoring line (200) that joins the first rotary fixing means (3) with the third rotary fixing means (2d).

- Central section (6): this is the part of the anchoring line (200) that connects to the central counterweight (1).

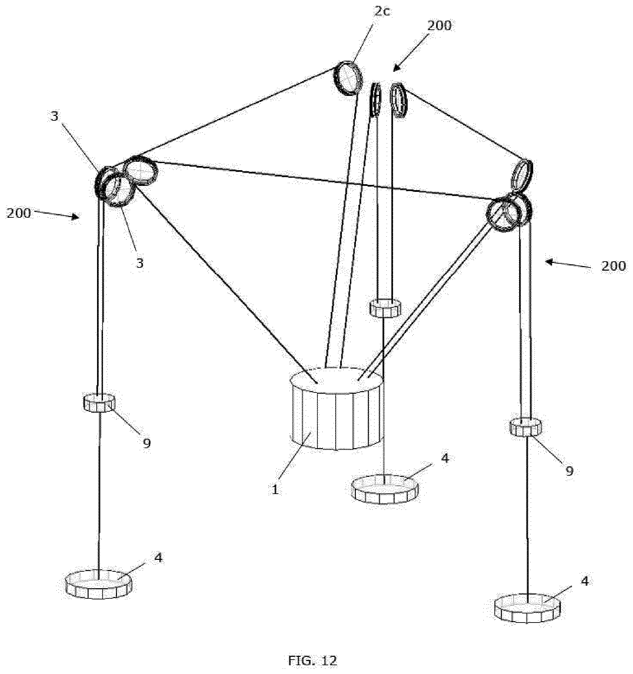

In the first subline (200d), if there is a third rotary fixing means (2d), the central section (6) connects said third rotary fixing means (2d) (inner pulley) with the central counterweight (1). In none of the embodiments shown in Figures 12 to 21 is such a third rotary fixing means (2d) shown.

In the absence of the third rotary fixing means (2d), in the first, second, third and fourth embodiments, the central section (6) of the first subline (200d) connects the first rotary fixing means (3) (outer pulley) with the central counterweight (1).

If the third rotary fixing means (2d) is not present, in the fifth embodiment, the central section (6) of the first subline (200d) connects the second rotary fixing means (2c) with the central counterweight (1).

In the second subline (2c), the central section (6) is the section connecting the second rotary fixing means (2c) to the central counterweight (1).

- Intermediate buoy (9): an optional element which can be interposed in the bottom section (8) of each anchoring line (200). The buoy (9) is attached to the seabed (5) by a cable (a first portion of the bottom leg (8) of the anchoring line (200)). The first portion of the bottom leg (8) may comprise one or more cables or chains in parallel. The advantage of using this buoy (9) is that it can be preinstalled when the ground is conditioned and the bottom weights (4) are put in place, levelling it at the correct height so that then, when installing the floating platform (100), one only has to connect the anchoring lines (200) (the second portion of the bottom section (8) of each anchoring line (200)) to the buoy (9), which come prepared with their correct length, significantly accelerating the installation process of the floating platform (100).

- Central axis (300) of the anchoring system: a vertical axis that passes through the centre of gravity of the counterweight (1) in its resting (or projected) position. Preferably, this central axis (300) constitutes a central axis (300) of symmetry of the floating platform (100).

- Anchoring subline (generic): the basic unit of the anchoring system, composed of the following elements:

o An anchoring weight (or bottom weight (4)) supported on the seabed (5) (which may be shared by several anchoring sublines);

o A first rotary fastening means (3) (or external or external pulley): fixedly or partially flexible (or rotating/swivel) fastened to the floating platform (100), close to the vertical of the bottom weight (4);

o One or two internal or inner pulleys (2) (at least a second rotary fixing means (2c) (crossover pulley) and, optionally, a third rotary fixing means (2d) (direct internal pulley)): attached(s) to the floating platform (100) in a fixed or partially flexible (or rotating/swivel) manner, at some point on the structure of the floating platform (100). Despite their name, they are at a certain distance from the central axis (300) of the floating platform (100);

o The corresponding part of the central counterweight (1) (several cables (at least three) must necessarily share the same counterweight (1));

o A cable that joins all these elements, composed of the sections defined above (central section (6), intermediate section (7) and bottom section (8));

o Optionally there may be an intermediate buoy (9) sandwiched in the bottom section (8);

o Optionally there may be some (preferably one or two) intermediate pulleys (rotary guiding means (11)), which serve to support the intermediate section (7) of the cable of the anchoring sublines, or which help to orient the cable by the most suitable path.

o Some of the pulleys described above can be self-adjustable, to adapt to the direction variations suffered by the central section (6) and the bottom section (8), due to the movements of the floating platform (100).

- Protruding structural arms (12): on floating platforms (100) in which the external pulleys (first rotary fixing means (3)) are farther from the central counterweight (1) than the perimeter of the main structure (400) of the floating platform (100), these protruding structural arms (12) are extensions of the bracket-shaped helmet (or any other type of structure) which serve to clamp the external pulleys (first rotary fixing means (3)), inner pulleys (2) (second rotary fixing means (2c) and, optionally, third rotary fixing means (2d)) or intermediate pulleys (rotary guiding means (11)).

- Central subline: This is an anchoring subline in which the inner pulley is very close to the platform axis (on the same side as the outer pulley). It is the fundamental element of the anchoring system described in the state of the art document ES 2629867 A2, the precursor of the proposed anchoring system.

- Direct subline (this is the first subline (200d) in the first, second, third and fourth embodiments): It is an anchoring subline in which, in case there is a third rotary fixing means (2d) (direct inner pulley), said third rotary fixing means (2d) is close to the first rotary fixing means (3) (outer pulley), namely between the first rotary fixing means (3) and the central axis (300) of symmetry of the counterweight (1). This subline does not have rotary guiding means (11) (intermediate pulleys supporting the intermediate section (7)); the reason is because the intermediate section (7) of this type of subline is very short and the whole subline is in the same plane (it is not necessary to reorient it).

- Crossover subline (this is the second subline (200c) in the second and fourth embodiments): An anchoring subline in which the second rotary fixing means (2c) (the inner crossover pulley) is beyond the central axis (300) of the floating platform (100), and in a different plane to the plane of the direct subline (anchoring plane of the anchoring line (200)); this crossover subline is always supported by one or more rotary guiding means (11) (intermediate support pulleys of the intermediate leg (7)). Its intermediate section (7) is much longer than in the direct sublines and does not follow a straight trajectory.

- Diagonal subline (this is the second subline (200c) in the first, third and fifth embodiments, and is also the first subline (200d) in the fifth embodiment): An anchoring subline wherein (for floating platforms (100) with protruding structural arms (12)) the second rotary fixing means (2c) (the inner crossover pulley) is on a first protruding structural arm (12) different from the protruding structural arm (12) of the first rotary fixing means (3) (the outer pulley), and is located near the outer pulley (first rotary fixing means (3)) of that protruding structural arm.

In the first and fifth embodiments, the intermediate section (7) of the diagonal subline is straight, without rotary guiding means (11) (without supporting pulleys). Dynamically it behaves similarly to the crossover sublines, because it does not matter what the path of the intermediate section (7) is. What is really important are the positions of the inner and outer pulleys.

In the third embodiment, the intermediate section (7) of the diagonal subline does comprise at least one rotary guiding means (11) (intermediate pulley), to allow the diagonal subline to follow a path close to the perimeter, contour or periphery of the floating platform (100).

A complete anchoring line (200) is a set of two anchoring sublines (a first subline (200d) and a second subline (200c)), which share the same bottom weight (4), a part of the bottom section (8) of the anchoring cables and the corresponding part of the central counterweight (1). Its external or external pulleys (first rotary fixing means (3)) are very close to each other; in general, they are parallel with the same axis of rotation. On platforms using protruding structural arms (12), these outer pulleys hang from the end of the same protruding structural arm (12). Instead of two outer pulleys, it may comprise a single outer pulley with at least two sheaves (one sheave for the first subline (200d) and one sheave for the second subline (200c)).

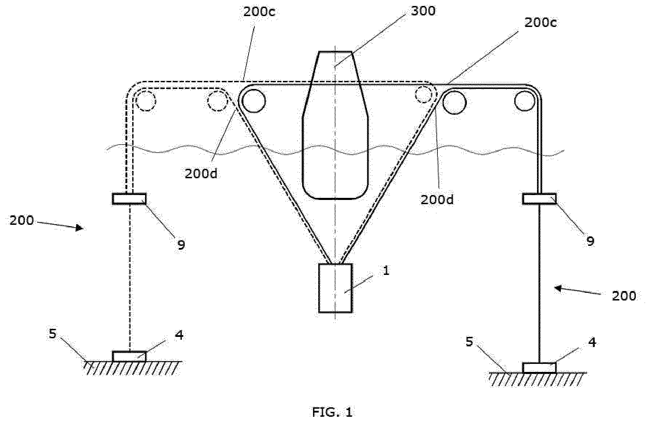

- Parallel anchoring line (200): An anchoring line (200) in which its bottom section (8) is vertical (in its rest position), as shown in Figures 1 to 10; all bottom sections (8) remain parallel (even if in different planes) even if the platform moves.

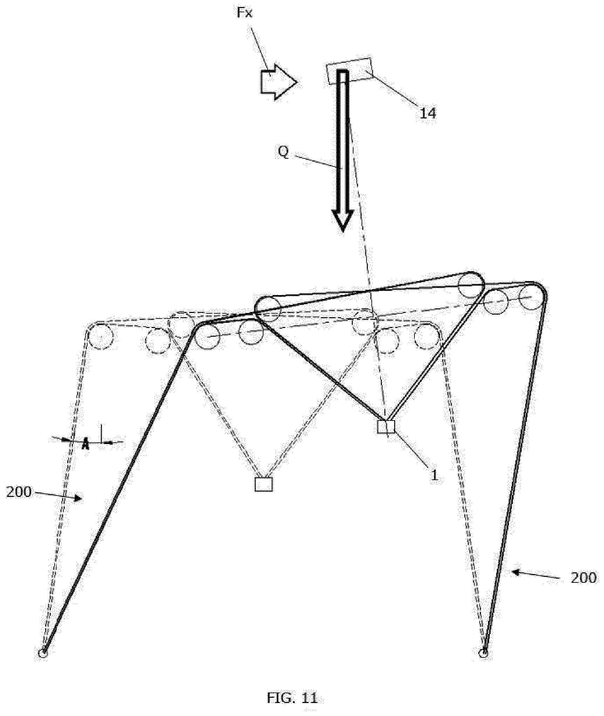

- Divergent anchoring line (200): an anchoring line (200) which in its bottom section (8) (the one fastened on the seabed (5)) is not vertical, but instead is inclined outward (forming an angle (A) with the vertical), that is, the lower end of the anchoring line (200) is further away from the central counterweight (1) than the outer pulley (Figure 11).

- Group of anchoring lines (200): It is the set of several anchoring lines (200) that share a common central counterweight (1). The resulting arrangement is necessarily radial, although each branch may have different size (distance between the centreline axis and the outer pulley). All the internal pulleys of the group must be at the same distance from the central axis (300) of the floating platform (100) (which coincides with the vertical of the counterweight (1)).

Floating platforms (100) with very elongated geometries may have installed several groups of anchoring lines 200 acting on the same counterweight (1) (the centrelines of each group of anchoring lines 200 are fastened to different points of the counterweight (1), which is also elongated).

On particularly large floating platforms (100), there may be several groups of anchoring lines (200), each group having its corresponding counterweight (1).

In all the preferred embodiments shown in the figures, the anchoring system has only one group of anchoring lines (and therefore a single counterweight (1)).

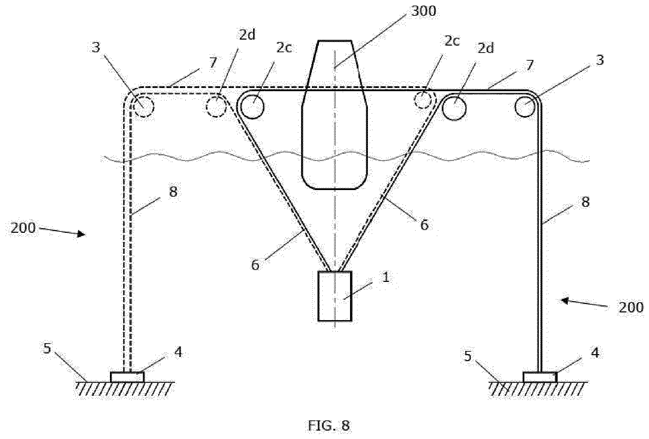

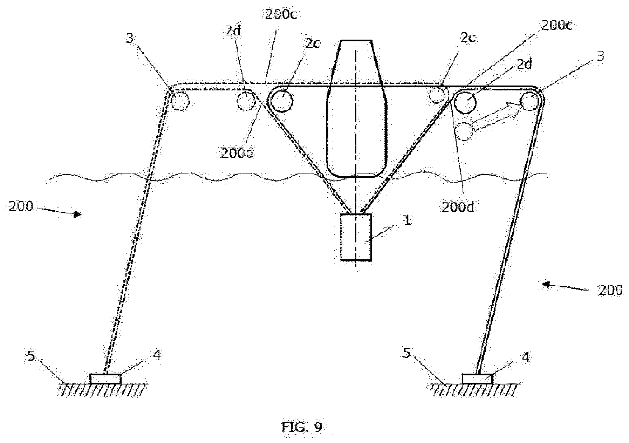

- SLP (Soft Leg Platform): a floating platform (100) on which the anchoring system proposed in this patent application has been installed. In each complete anchoring line (200) there are two anchoring sublines (200d, 200c), whose inner pulleys (second rotary fastening means (2c) and third rotary fastening means (2d)) are at the same distance from the central axis (300) of the floating platform (100). Each anchoring line (200) is composed of a direct subline (200d) and a crossover subline (200c), whose inner pulleys (second rotary fixing means (2c) and third rotary fixing means (2d)) are located symmetrically with respect to the vertical central axis (300) passing through the central counterweight (1), as can be seen in figures 8 and 9.

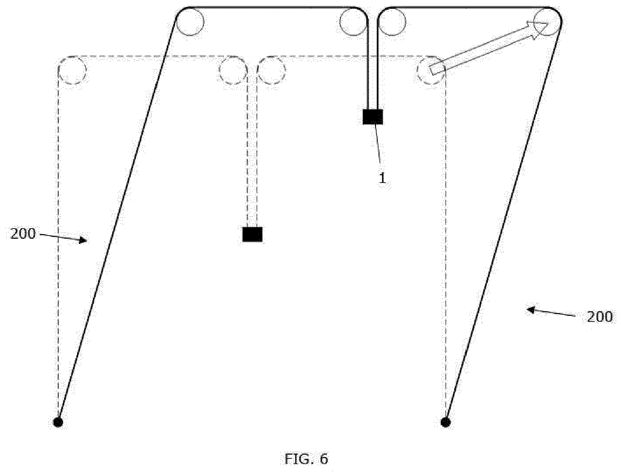

- Central well (optional, not shown in the figures): a hole that vertically crosses the entire floating platform (100), just below the inner pulleys (as shown in Figure 6), for the passage of the pendulum (cables of the central section (6) and counterweight (1)); if the inner pulleys are very far apart from the vertical of the central counterweight (1), the central well is unnecessary.

Most of the elements that make up the proposed system have been described above. There are other optional elements that can help the proper functioning of the main elements and other elements that can help the actual implementation in a given platform.

The simplest configuration is composed of three locking anchoring lines (200), each of which is composed of two sublines (a first subline (200d) and a second subline (200c)), each of which includes:

- A bottom weight (4) supported on the seabed (5);

- Two rotary pulleys or rotary fixing means (2, 3): one outer pulley (or first rotary fixing means (3)) and one inner pulley (second rotary fixing means (2c)); optionally, there may be a second inner pulley (or third rotary fixing means (2d)) for the first subline (200d) of each anchoring line (200);

- One or two intermediate support pulleys of the intermediate section (7) (rotary guiding means (11)), positioned on the intermediate section of the second subline (200c) in the second, third and fourth embodiments.

- A central counterweight (1), common to the three anchoring lines (200);

- A cable (on each subline) linking the bottom weight (4) to the central counterweight (1), passing through the outer pulley (first rotary fixing means (3)), one or more intermediate pulleys (rotary guiding means (11)) and the inner pulley (second rotary fixing means (2c) or third rotary fixing means (2d)), defining three sections (6, 7, 8) on those sublines (200c, 200d) which have inner pulleys:

    o The central section (6) of the anchoring cable, which joins the inner pulley (second rotary fastening means (2c) or third rotary fastening means (2d)) with the central counterweight (1). Its length depends on the vertical position of the central counterweight (1). Optionally, the part of the cable closest to the central counterweight (1) is called the anchoring cable adjustment section (not identified in the figures, as it is of little relevance to this invention) and can be used to adjust the overall length of the cable to the irregularities of the seabed (5) at the point where the floating platform (100) is to be positioned;

    ○ The intermediate section (7) of the anchoring cable, which connects the inner pulley (second rotary fixing means (2c) or third rotary fixing means (2d)) with the outer pulley (first rotary fixing means (3)), passing (if applicable) through the rotary guiding means (11) (intermediate support and guiding pulleys of the intermediate section (7)); by its nature it has a constant length, but this length does not have to be the same in all the sublines;

    ○ A bottom section (8) of the anchoring cable, which joins the outer pulley (first rotary fixing means (3)) with the bottom weight (4). Its length depends on the geographical position of the platform (i.e. the depth of the seabed (5)). Optionally, this bottom section (8) may be divided into two parts or portions that are attached to an intermediate buoy (9). In this way the installation and maintenance operations of the cables are facilitated.

Since the three sections (6, 7, 8) are part of the same cable, the sum of their lengths is constant. The mission of these elements is to prevent the roll and pitch movement of the floating platform 100, allowing it to move horizontally or vertically.

If the floating platform (100) moves vertically a height V, the counterweight moves vertically a height 2V, but the forces on the floating platform (100) hardly vary.

If the floating platform (100) moves a quantity H horizontally, the anchoring lines (200) generate an opposing horizontal force that tends to return the floating platform (100) to its original position. The vertical forces on the floating platform (100) hardly vary. The counterweight (1) moves slightly upwards.

If a bending moment is applied that attempts to cause the floating platform 100 to rotate in the pitch direction, the tensions of the cables of the anchoring lines 200 vary to compensate for it and prevent rotation; if that bending moment increases sufficiently, one of the anchoring lines 200 will lose its tension and the floating platform 100 will be held only by the other anchoring lines 200. In general, the hull or central structure (400) of the floating platform (100) will begin to submerge slightly.

When all but one of the anchoring lines (200) have been untensioned, the overturning of the floating platform (100) may begin. This overturning will be reversible or irreversible depending on the particular geometry of the assembly as a whole.

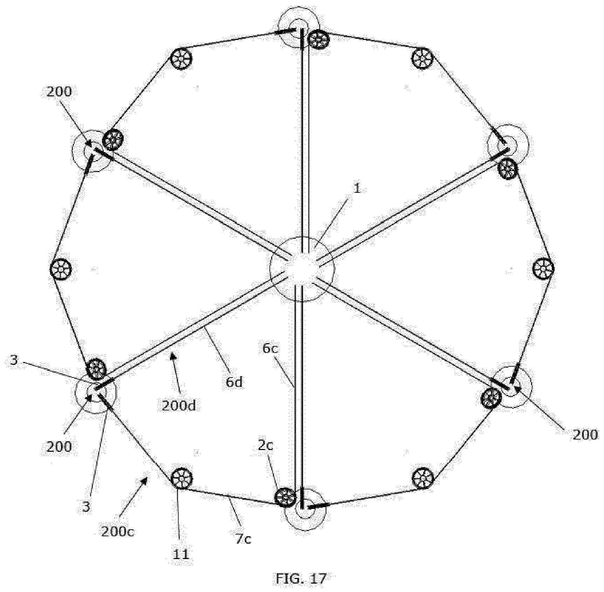

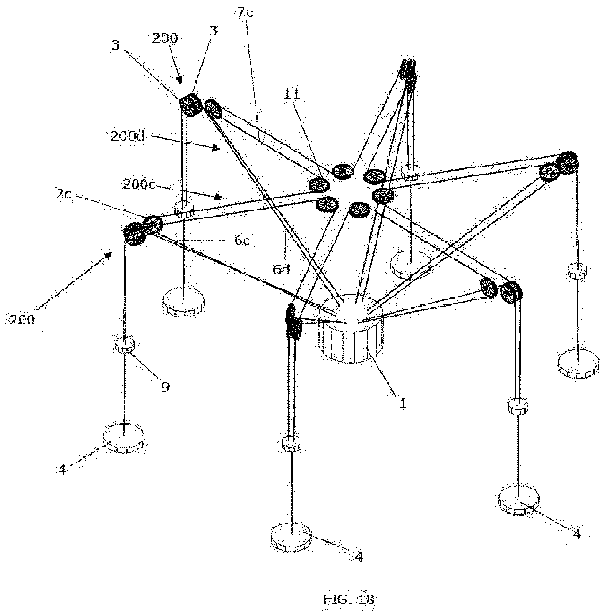

The floating platform (100), depending on its geometry, may need some elements that facilitate the correct functioning of the anchoring system. Some can be seen in Figure 17 (perspective (3D) view) and Figure 18 (plan view); other elements are normal in shipbuilding and have not been depicted in the figures. These include, but are not limited to:

- Two rotary guiding means (11) (intermediate section support pulleys (7)): The intermediate section (7) of the crossover line or diagonal line does not follow a straight trajectory, so two intermediate section (7) support pulleys (rotary guiding means (11)) are included, to orient this intermediate section (7) and avoid the main structure (400) of the floating platform (100).

- Removal of the intermediate section (7): The intermediate section (7) of the first subline (200d) (direct subline in the first, second, third and fourth embodiments) can be removed in some configurations by matching the inner and outer pulleys of this first subline (200d) on the same pulley.

- Protruding structural arms (12) for supporting the outer pulley (first rotary fixing means (3)): on floating platforms (100) supporting wind turbines, the diameter of the floating platform (100) is much smaller than the optimum distance for positioning the outer pulley (first rotary fixing means (3)). Radial, protruding structural arms (12) are then required which protrude from the main structure (400) of the floating platform (100) and from which the outer pulley (first rotary fixing means (3)) hangs; this protruding structural arm (12) can be either a latticed structure (the elements are exposed to the elements) or a closed structure (the elements are protected from the elements); the choice of one type or the other will depend on the philosophy of the particular design.

In the case of floating platforms (100) used to support wind turbines, there are several particular features:

- The floating platform (100) does not need a large deck surface, it can be a small buoy that supports the weight of the wind turbine and its tower (13);

- The main design force is the aerodynamic thrust of the wind on the rotor blades of the wind turbine.

- The force of the wind exerts a very large bending moment on the base of the tower (13).

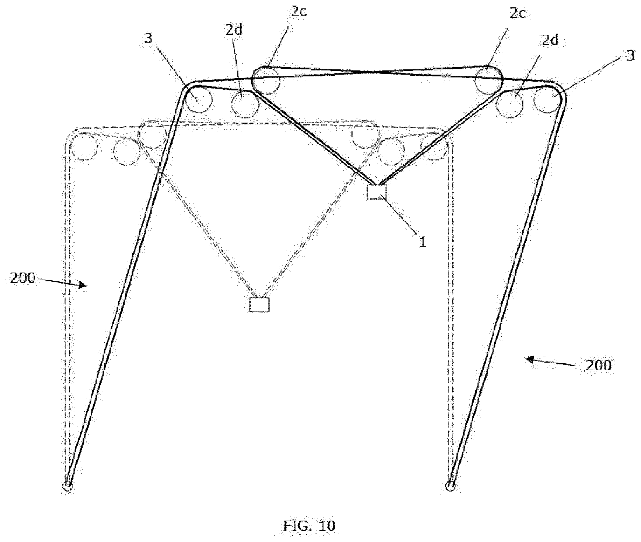

If the anchoring lines (200) in the design condition are not vertical (as seen in Figure 10), but slightly divergent (as seen in Figure 11), then, when the floating platform (100) is swept by the wind, the leeward pulley rises relative to the windward pulley, as a consequence, the floating platform (100) has a pitch angle opposite to the wind force, this pitch angle is proportional to the horizontal displacement of the floating platform (100) and is barely sensitive to the vertical movement of the floating platform (100).

This angle causes the weight (Q) of the nacelle (14) to have an axial component opposite to the force of the wind on the rotor blades, which is proportional to the rotated angle, which in turn is proportional to the horizontal movement of the floating platform (100), which in turn is proportional to the force exerted by the wind. If these proportionality constants are properly synchronised, the axial component of the nacelle weight (14) can be made to exactly cancel the wind force, whatever the wind speed (this is really only true until the leeward anchoring line cable (200) is untensioned).

In this way the bending moment at the base of the tower (13) due to the wind could be totally annulled. There would still be the forces and moments due to the waves, but they are lesser forces and moments. As a result:

- The tower (13) could be lightened, giving less thickness to its structural elements;

- The forces acting on the nacelle load bearings are reduced (14);

- The loads on the anchoring are reduced, and the floating platform structure (100) could be lighter (and inexpensive to build).

On floating platforms (100) dedicated to marine leisure, the external agent that has the most influence on the comfort of passengers is the effect of the waves. With the proposed system, the rotating movements of the floating platform (100) are cancelled out, the vertical movement has little influence (especially if a semi-submersible type floating platform (100) is used), but the effect of the horizontal movement of the waves remains, which in severe seas can generate significant accelerations (up to 1.5 m/s$^2$).

In some applications, a divergent anchoring system can be used, which produces a pitching motion opposite to the horizontal motion. This pitching can generate a longitudinal acceleration that opposes the acceleration of the horizontal movement, so that the resultant acceleration is perpendicular to the deck and therefore lower than if the floating platform (100) moves without pitching; this improves the comfort of the people on board.

A terrestrial analogy of this horizontal movement and of inverse pitch would be the movement of a swing or a hammock, which has great movements and turns, but does not generate the sensation of accelerations. In fact, the accelerations remain perpendicular to the surface of the deck of the floating platform (100) (perpendicular to the surface of the seat, in the case of the swing).

The operating scheme would be similar to that of Figure 11, but with an angle (A) of divergence somewhat greater than that shown in this figure.

A difficulty that appears is that the cancellation of longitudinal accelerations can only be achieved for a relatively small range of waves, for example this cancellation can be achieved for waves between 8s and 10s;it is then a question of tuning these periods with the periods of the most likely waves. This tuning depends on:

- The geometry of the floating platform (100) and its stability and inertia.

- The geometry of the anchoring lines (200) and their elastic characteristics.

The anchoring line cable (200) is fairly long, measuring at least the draught in the area of operation, plus the length of the protruding structural arms (12) (typically between 30 and 40m), plus twice the height between the outer pulleys (first rotary fixing means (3)) with respect to the sea surface, plus twice the maximum vertical travel of the floating platform (100) (tide height + maximum wave height), plus 20% of the sea draught in the installation area and the margin deemed appropriate for other reasons.

Of this length, a part is not subject to wear of any kind, but another part is subject to friction, bending (in the pulleys) and fatigue phenomena.

For this reason, in some applications, the cables of the bottom sections (8) do not reach the seabed (5), but are attached to an intermediate buoy (9) located relatively close to the sea surface and anchored to the seabed (5) by chains or cables, so that in case of wear only the upper part of the cable, which is the part that is most subject to wear and corrosion (it is also the most accessible part), needs to be replaced.

The length of the detachable cables (or, in other words, the depth of the buoys) must be such that, with the greatest foreseeable movements of the floating platform (100), the buoys (9) never come close to the outer pulleys (first rotary fixing means (3)); if they touch each other, a major failure may occur. The cable material can be any material suitable for cables, among others:

- Twisted wire cable: there is no possibility of twisting, as the tension of the anchoring lines (200) (applied according to the edges of a vertical prism) prevents the yaw of the floating platform (100).

- Synthetic or textile material cable.

- Link chains: this is ideal for the middle section (7) (and the upper part of the other two sections) of floating platforms (100) that support wind turbines, as it allows the use of toothed pulleys and has relatively small turning radii. Its drawback is that it is noisier. For leisure facilities it is less recommended and should be very well acoustically insulated.

In marine leisure platforms, the intermediate section (7) and the upper part of the other two sections should be made of textile material, as with waves, it is continuously moving and would be quieter than if it were made of chain with links (which could cause noise problems in the structure).

On large floating platforms (100) or those with only three anchoring lines (200), the forces appearing in the cables can be quite high. In this case, the line can be split into two, three or more parallel lines of smaller dimensions. In this case:

- Pulleys are double, triple or with more pulleys.

- The cables run parallel along their entire length (in each of their sections).

- The connections to the counterweight (1) and anchoring ring are very close to each other.

Although they have already been described in some form, the following is a summary of the types of anchorings that can be designed, using sublines (200d, 200c) of anchorings grouped in different ways. All are particular cases of the "SLP" (Soft Leg Platform) anchoring system that is the object of the present invention.

In all cases it is assumed that there are a certain number of anchoring lines (200) (each consisting of two anchoring sublines (200d, 200c), evenly distributed around the central counterweight (1). In general, each system consists of three anchoring lines (200), although it can have a greater number of them if the floating platform (100) is sufficiently large.

In all cases, the central sections (6) of cable exiting towards the central counterweight (1) from the inner pulley (2) (second rotary fixing means (2c) and, eventually, third rotary fixing means (2d)) of all the sublines (200d, 200c), have to be at the same distance from the central axis (300) of the floating platform (100); the outer pulleys (first rotary fixing means (3)) can be at different distances.

The bottom sections (8) can reach the seabed (5), or be connected to an intermediate buoy (9), whose anchor cable connects it to the corresponding bottom weight (4).

SLP (Soft Leg Platform):

This is the anchoring system according to the first, second, third and fourth proposed forms of embodiment.

In this case, in each anchoring line (200) there is a first subline (200d) (direct subline) (with or without inner pulleys (third rotary fixing means (2d)) and a second subline (200c) (which may be a crossover subline or a diagonal subline), which has to have its inner crossover pulley (second rotary fixing means (2c)) which is on a protruding structural arm (12) different from that of the outer pulley (first rotary fixing means (3)). Considering the characteristics of the second subline (200c), there are four possibilities:

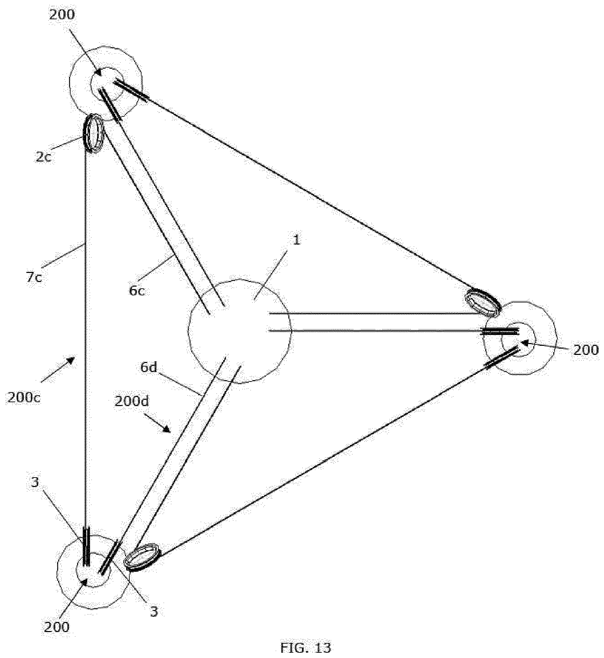

- Direct diagonal subline: The intermediate section (7) of cable of the second subline (200c) (now referred to as diagonal) runs directly from the outer pulley (first rotary fixing means (3)) to the inner pulley (second rotary fixing means (2c)); these pulleys are oriented such that they are in the plane defined by the two sections of cable impinging on each pulley. Figures 12 and 13 show two projections (3D and plan) of such an anchorage, for a floating platform (100) with three protruding structural arms (12).

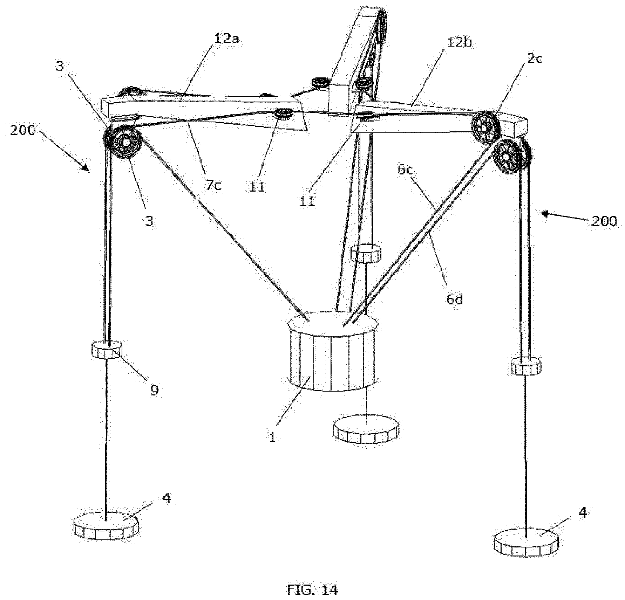

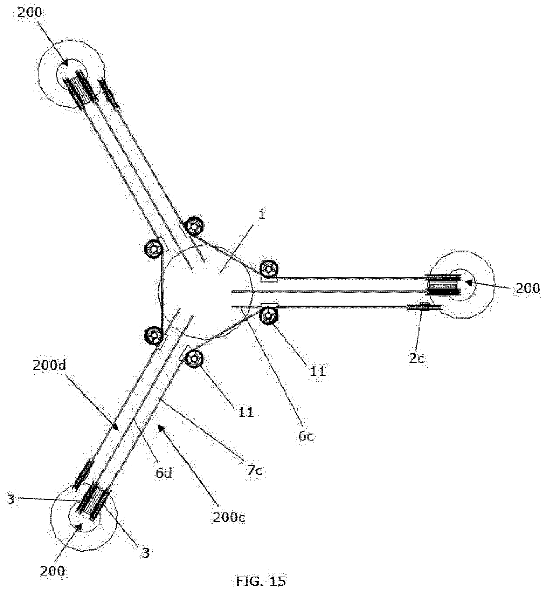

- Crossover subline: The intermediate section (7) of cable of the second subline (200c) (now referred to as a crossover) passes through one or more intermediate pulleys (rotary guiding means (11)) that support it and help maintain alignment of the pulleys with the anchoring cables when the floating platform (100) changes position. In one possible embodiment, the intermediate pulleys are attached to the protruding structural arms (12) of the floating platform (100), as can be seen in Figures 14 and 15. This ensures that the main pulleys (inner (second rotary fixing means (2c) and outer (first rotary fixing means (3)) are all parallel in the design condition and that the outer pulleys of the two sublines (200d, 200c) can be mounted on the same swivel bracket.

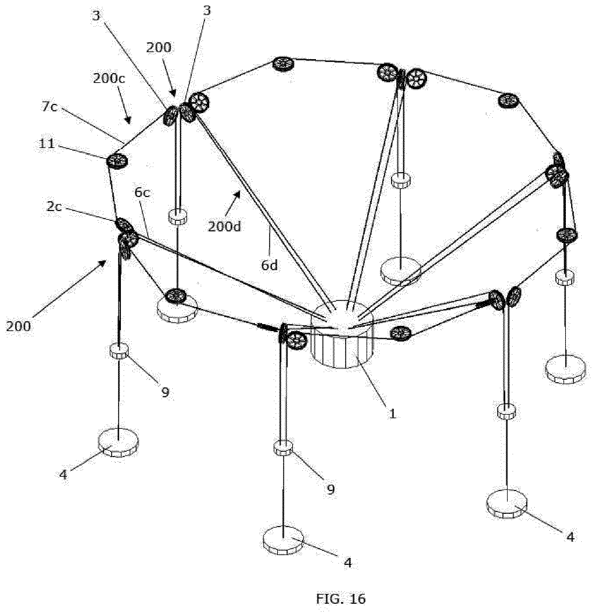

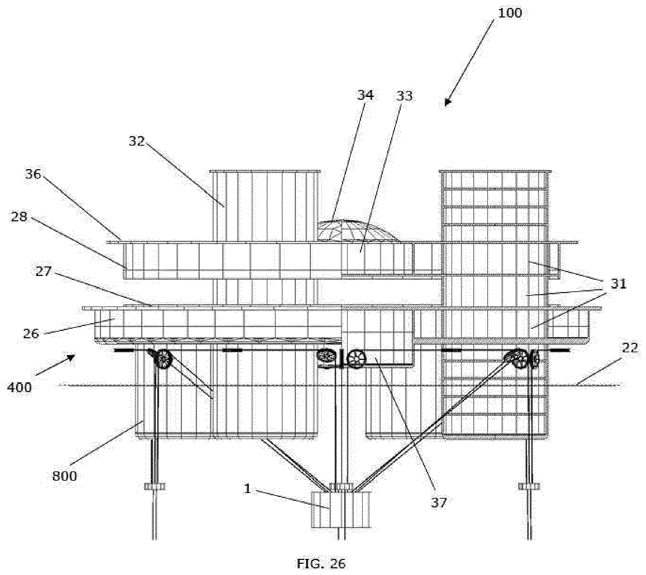

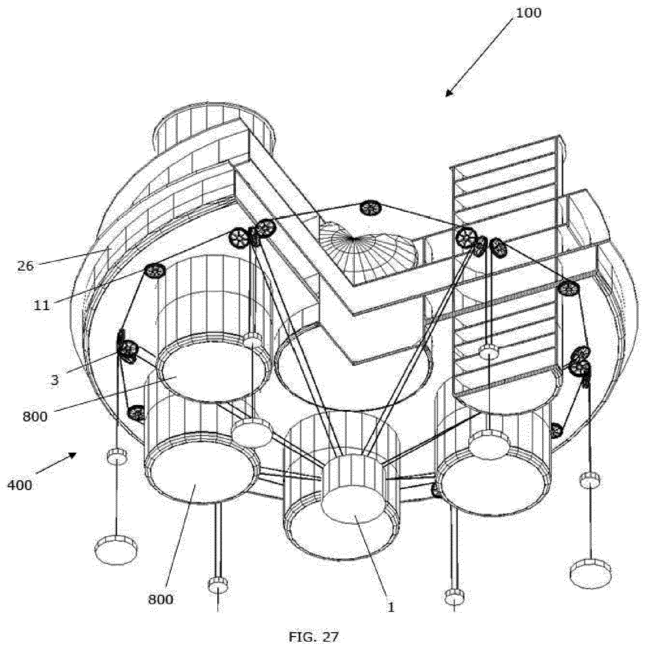

- Circular diagonal subline: This is a version for a high number of anchoring lines (200) (five or more). It is especially suitable for floating platforms (100) for marine leisure, which have a large deck surface, more or less circular in shape. It consists of several composite anchoring lines (200), the second subline (200c) (diagonal subline) of which includes intermediate pulleys (rotary guiding means (11)) that deflect the intermediate section (7) of the second subline (200c) from the anchoring line (200), more or less below the contour of the superstructure of the floating platform (100). These pulleys also allow the cables to skirt columns (800) that are part of the floating platform structure (100). An example of this type of anchoring can be seen in Figures 16 and 17, which has also been used for the embodiment of a platform for marine leisure (Figures 26 and 27).

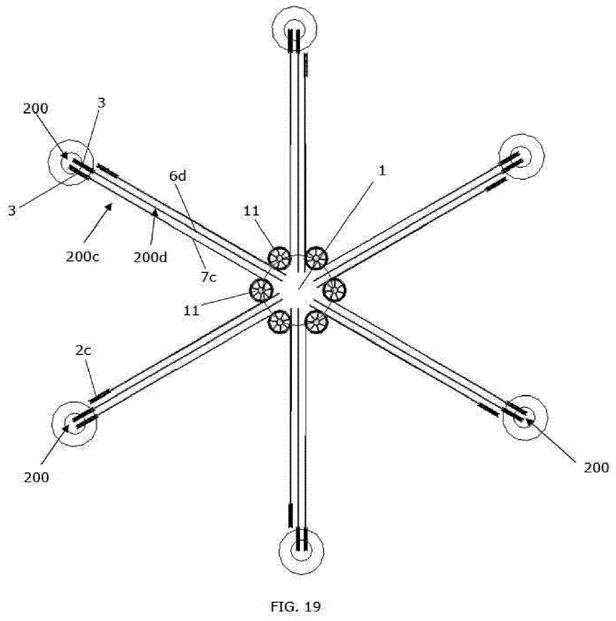

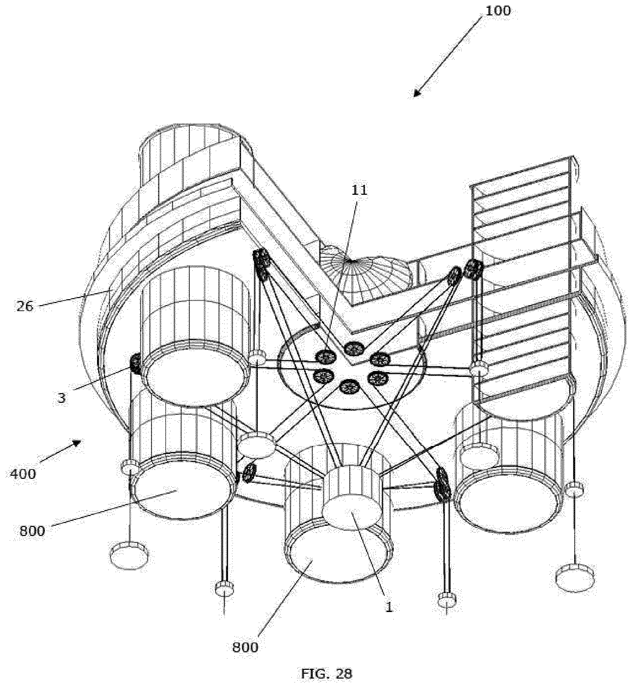

- Star-crossover subline: This is a version for a high number of anchoring lines (200) (five or more). It is particularly suitable for marine leisure floating platforms (100), which have a large deck area; it is very similar to the circular arrangement, but the idler pulley (intermediate pulley or rotating guide means (11)) is located very close to the central axis (300) of the floating platform (100), so that the two sections into which the intermediate section (7) of cable is divided are parallel to the planes defined by the central axis (300) of the floating platform (100) and the bottom sections (8) of two adjacent anchoring lines (200) (the respective anchoring planes of two adjacent anchoring lines (200)). The advantage of this system is that the outer pulleys (first rotary fixing means (3) of the two sublines (200d, 200c), in case there are two outer pulleys for the same anchoring line (200)) are parallel and can be installed on the same swivel bracket under the first deck (26) of the hull of the floating platform (100), and the inner pulley (second rotary fixing means (2c)) is parallel to the outer pulleys, so that it can be installed on a fixed axis attached to the bottom of the first deck (26) of the platform. An example of this type of anchoring can be seen in Figures 18 and 19, which has also been used for the embodiment of a platform for marine leisure (Figure 28).

The last two possibilities are particular cases for large floating platforms (100). The third embodiment is suitable for floating platforms (100) with a large deck area and the fourth embodiment is also suitable for floating platforms (100) with protruding structural arms (12).

CLP (Cross Leg Platform) anchorage:

This is the anchoring system according to the fifth proposed embodiment.

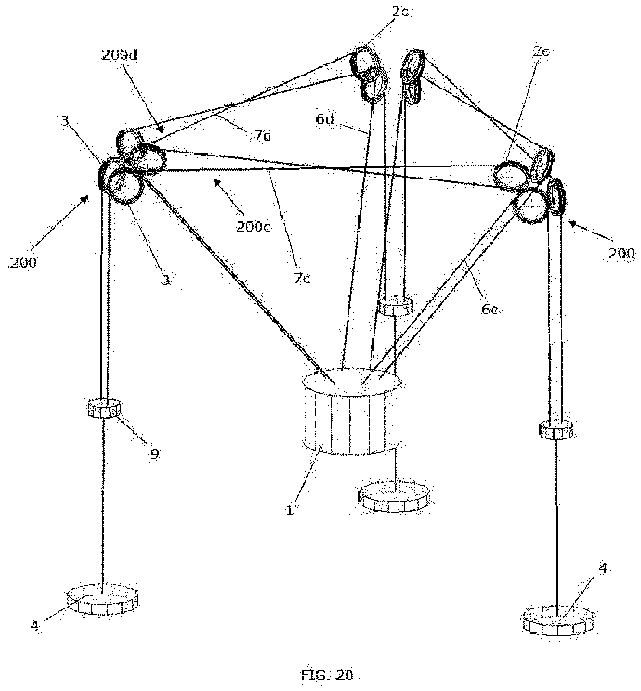

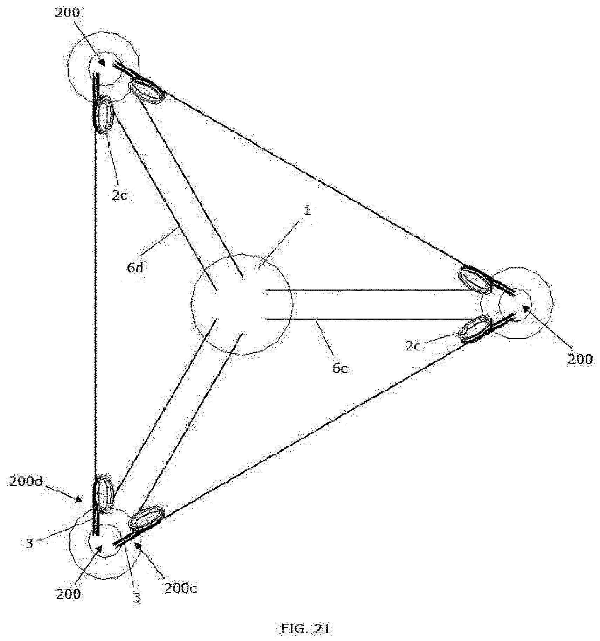

This type of anchoring system has no direct sublines; the two sublines (200d, 200c) are diagonal. Its intermediate sections (7) are directed to the two projecting structural arms (12) adjacent to the projecting structural arm (12) from which the outer pulleys (first rotary fixing means (3)) of each anchoring line (200) hang. Two projections of this anchoring system can be seen in Figures 20 and 21.

The theoretical basis of the invention is based on a geometric construction, as can be seen in Figure 6.

Each anchoring cable can be considered almost non-extensible. If we assume it consists of three sections with lengths: T6 (length of the central section), T7 (length of the intermediate section) and T8 (length of the bottom section), the sum of lengths (T6, T7, T8) of the three sections (6, 7, 8) is constant: $T6 + T7 + T8 = $ constant.

Since the intermediate section (7) does not vary in length, it is also fulfilled that: $T6 + T8 = $ constant.

The floating platform (100) has two anchoring lines (200) (assuming a flat movement, if it is three-dimensional, there would be at least three anchoring lines (200), but the result is the same). If we compare the lengths of the sections in two different positions of the platform:

- Projected condition: it has two lines (P and Q), each with the aforementioned three sections;

- Any other position: the lines are transformed into (R and S).

Since each line (P, Q, R, S) maintains its length:

$$T6(P) + T8(P) = T6(R) + T8(R) \quad \text{and} \quad T6(Q) + T8(Q) = T6(S) + T8(S)$$

Since T6(P) = T6(Q) and T6(R) = T6(S) (they represent the same measure).

If we start from two symmetrical lines, i.e. T8(P) = T8(Q), then T8(R) = T8(S)

That is, the two outer pulleys (first rotary fixing means (3)) and the two bottom weights (4) form an "articulated" quadrilateral in which their opposite sides are equal and therefore the upper side always remains parallel to the lower side, regardless of the position of the centre of the floating platform (100).

To block the rotation of the floating platform (100) in a plane, two anchoring lines (200) are sufficient, as seen in Figures 6. For example, if the pitch angle is to be avoided, two anchoring lines (200) are needed in a longitudinal plane, with one outer pulley at the bow and one outer pulley at the stern, with the two inner pulleys between them (the intermediate sections of the anchoring cable need not be the same). If the roll angle is to be avoided, the two anchoring lines (200) must be in a plane transverse to the waves.

To simultaneously lock the two turns (pitch and roll) at least three anchoring lines are required, with the outer pulleys (first rotary fixing means (3)) preferably arranged at the vertices of an equilateral triangle, although it could also be an isosceles triangle if the floating platform (100) were longer than wide or if the general distribution of the premises inside the floating platform (100) does not allow a solution with circular symmetry.

Figures 8 and 9 show a schematic of a complete anchoring line (200) consisting of a direct subline (first subline (200d)) and a crossover subline (second subline (200c)), representing the positions of the floating platform (100) in its design condition (Figure 8) and in any other position (Figure 9).

The two inner pulleys (2d: direct and 2c: crossover) are at the same distance from the central axis (300) of the floating platform (100) (actually the pulley axes are at different distances, but such that the central sections (7) appear to come from symmetrical points: the point of contact of the cable with the pulley). In the design condition (Figure 8), the lengths of the two sublines (200c, 200d) are different, but are such that the central sections (6d, 6c) are equal, so that the central counterweight (1) is located in correspondence with the central axis (300) of the floating platform (100).

When the floating platform (100) is moved (Figure 9), the bottom sections 8d and 8c change in length, but remain equal to each other. The intermediate sections (7d and 7c) do not vary in length (the pulleys move rigidly with the platform). Since the total length of each subline (200c, 200d) does not vary, the central sections (6d and 6c) also vary in length, but remain equal to each other, i.e. the central counterweight (1) moves vertically, but remains located in correspondence with the central axis (300) of the floating platform (100). In this way, the pendular movement that the counterweight (1) could have in the original version of the anchoring system is totally eliminated.

When two complete anchoring lines (200) are combined (each with direct subline (first subline (200d)) and crossover subline (second subline (200c)), applying the same reasoning as when the lines are central (in the state of the art platforms with central well through which the central lines pass), the bottom sections (8) of each complete anchoring line (200) remain equal to each other, whatever the position of the floating platform (100). In this sense, the anchoring system (with direct (200d) and crossover (200c) sublines) behaves as if all the sublines were central.

The working scheme cannot be analysed by means of a flat scheme, since all the sublines are three-dimensional; however, it works exactly as in the international application PCT/IB2022/000334.

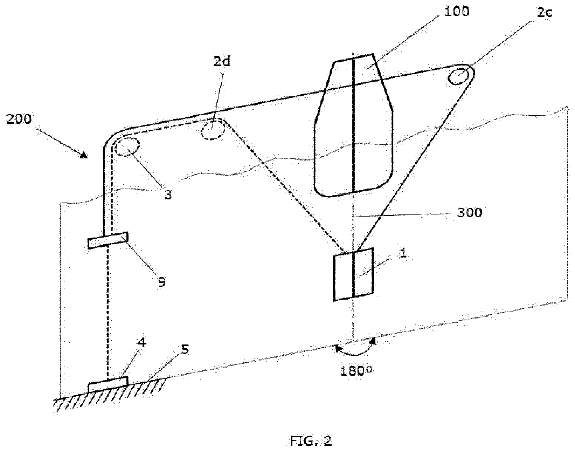

Figure 2 shows the schematic of a complete anchoring line, as you can see all its elements are in the same plane.

Figure 1 shows the anchoring lines of two opposing arms (as described in the international application PCT/IB2022/000334); as can be seen, all their elements are still in the same plane. To have a three-dimensional effect, two such groups arranged in perpendicular planes are required, i.e. the anchoring system of international application PCT/IB2022/000334 needs an even number of arms.

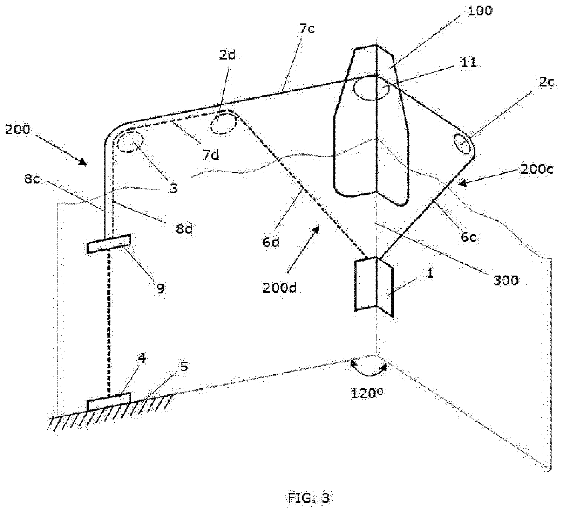

Figure 3 depicts the schematic of a complete anchoring line (200) as proposed in the present patent application. As can be seen it is almost identical to the one in Figure 2, but part of the elements of the crossover subline (second subline (200c)) are rotated, to align them to two consecutive or adjacent arms of the floating platform (100).

The direct subline (first subline (200d) (represented by dashed line) is all in the same plane (anchoring plane of the anchoring line (200) defined by the central axis (300) and the bottom section (8)). This direct subline (first subline (200d) goes from the bottom weight (4) to the intermediate buoy (9), and from there to one of the outer pulleys (first rotary fixing means (3)), then to the direct inner pulley (third rotary fixing means (2d)) and from there to the central counterweight (1).

The crossover subline (second subline (200c) (represented by solid line), is in two different planes: one coincides with the plane of the direct subline (anchoring plane of the anchoring line (200), but the other plane is rotated 120° (if the floating platform (100) has three protruding structural arms (12); if the platform has more than three protruding structural arms (12), this angle will be smaller = 360°/number of arms). The crossover subline comprises its bottom section (8) which starts at the bottom weight (4) and passes through the intermediate buoy (9); the crossover subline then passes through another outer pulley (first rotary fixing means (3)) and from there is directed to a rotary guiding means (11) (intermediate pulley supporting the intermediate section (7)), which is oriented according to a horizontal plane (its axis of rotation is vertical); in this rotary guiding means (11), the cable changes direction and passes to the secondary plane, in the direction of the inner crossover pulley (second rotary fixing means (2c)) and from there it is directed to the central counterweight (1).

Using similar reasoning to previous anchoring systems, whatever the movement of the floating platform (100), the central sections (6) will always be the same (they may change in length, but just by the same amount); this means that the central counterweight (1) can only move in a plane which is the bisector between the two inner pulleys (2d and 2c).

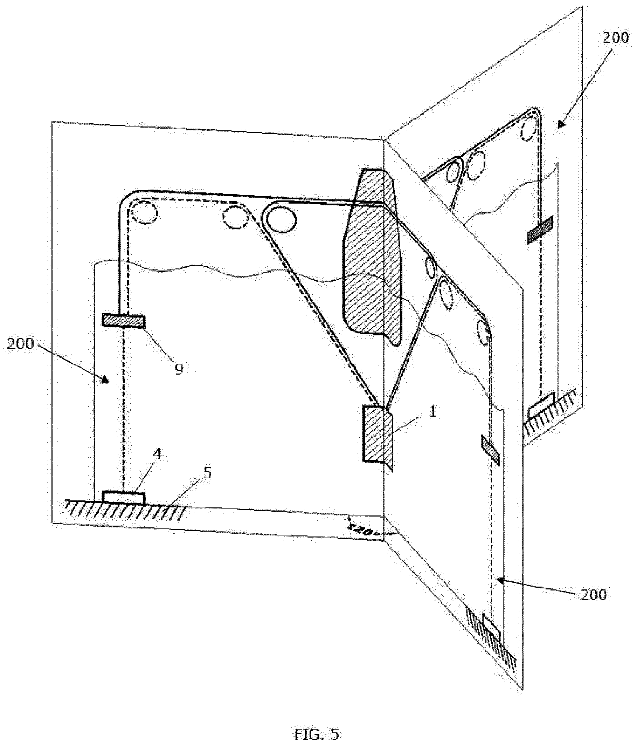

With a single anchoring line (200) this is of little use, but if the anchoring line (200) corresponding to another of the protruding structural arms (12) is added (as can be seen in Figure 5), then it is guaranteed that the outer pulleys (first rotary fixing means (3)) will always be at the same height and that the counterweight (1) will also be kept in the bisector plane of the second line. This means that the counterweight (1) has to move at the intersection of the two bisector planes of the two anchoring lines (200). This bisector is precisely the central axis (300) of symmetry of the floating platform (100); thus, the central counterweight (1) is always going to move on the central axis (300) of the floating platform (100): it can move up or down, but without lateral movements.

By adding a third anchoring line (200), it is ensured that all outer pulleys (first rotary fixing means (3)) are kept at the same height; the floating platform (100) can move vertically, but the pitch and roll angle is totally eliminated. As the floating platform (100) is always vertical, its central axis (300) of symmetry is always vertical (although it can move freely in a horizontal direction), which implies that the counterweight (1) will always be on the same vertical as the floating platform (100). This completely eliminates the pendulum motion that characterizes traditional anchoring with central sublines.

In short, the movement of the floating platform (100) and of the central counterweight (1) is exactly the same as with the invention proposed in international application PCT/IB2022/000334, but with the advantage that it can be applied to any number of anchoring lines (200); specifically it is valid for floating platforms (100) with three protruding structural arms (12). In contrast, the anchoring system of international application PCT/IB2022/000334 was only valid for floating platforms (100) with an even number of protruding structural arms (12) (four arms in most applications).

The scheme of operation of the system with direct (200d) and crossover (200c) sublines, can be seen in Figure 6. If it had only central sublines it would be the same scheme, with the angle ($\beta$) between the central sections (6) being null (i.e. they would be vertical).

As can be seen, the scheme is flat (although the anchoring lines (200) are in different planes, at 0° and at ±120°); all the bottom line sections have been rotated 60° so that the crossover sublines are seen in the same plane as the direct sublines (the plane of the drawing).

When the external agents (winds, waves or sea currents) act on the floating platform (100), they generate a bending moment (Mf) and a force (Fx) that pushes the floating platform (100) to the position seen in the figure.

On the other hand, the central counterweight (1) has a net weight (dry weight minus hydrostatic thrust) that tensions the two cables of the anchoring lines (200) generating two forces, in windward (F1) and leeward (F2). If the inertia forces due to the movements of the floating platform (100) and the counterweight (1) are ignored, the forces on the direct and crossover cables on each side are equal:

$$F1c = F1d = F1/2, \text{ and } F2c = F2d = F2/2$$

Due to the balance of forces in the counterweight, it is fulfilled that:

$$(F1 + F2) \times cosine (\beta) = P$$

These forces are transmitted by the cable to the bottom weights (4).

For the floating platform (100) to be in equilibrium, the two forces F1 and F2 applied on the bottom sections (8) must fully compensate for the bending moment of the external agents (Mf).

$$(F1-F2) \times \text{External pulleys distance} \times cosine (\alpha) = Mf$$

Since the lines do not work in compression, as long as F2 is positive, the floating platform (100) will remain horizontal, then it will start to tilt to leeward (when F2 is cancelled).

On the other hand, the balance of horizontal forces requires that:

$$FH = F1 \times sine\ (\alpha) + F2 \times sine\ (\alpha) = P \times sine\ (\alpha) / cosine\ (\beta) = Fx$$

According to a variant of the anchoring system wherein the anchoring lines (200) are divergent, the pitch angle imposed by external forces acting on the floating platform (100) can be corrected. The elasticity of the anchoring lines (200) means that when the floating platform (100) is subjected to external forces, the windward cables lengthen and the leeward cables shrink: as a result of these deformations the floating platform (100) acquires a small pitch angle leeward.

The indicated variant consists of giving an angle to the bottom sections (8) of the anchoring lines (200), separating out the anchoring points of the vertical of the outer pulleys (first rotary fixing means (3)), as can be seen in Figure 11.

When the floating platform (100) is moved horizontally dragged by the wind, the deck of the floating platform (100) does not remain horizontal and instead turns windward. This angle of rotation is geometrically related to the angle of the bottom sections (8) and to the depth of the seabed (5), being approximately proportional to the magnitude of the horizontal movement. By adjusting the angle of the bottom sections (8) of the anchoring lines (200), the pitch of the floating platform (100) can be cancelled exactly due to the elasticity of the anchoring lines (200), whatever the horizontal force applied (until any of the lines are deployed).

Below are proposed, by way of example, three alternatives for fastening the cables of the bottom section (8) on the seabed (5). In all of them, intermediate buoys (9) can be included in the bottom sections (8) (located at a depth similar to that of the counterweight (1), in its design position) joined by cables or chains to the anchorage on the seabed (5).

In this way, the final installation is very simple, since it is enough to hold the cables in the buoys (9) and the floating platform (100) is fully operational.

- An anchoring ring may be used, for example by joining all the bottom weights (4) together by a rigid structure, including fastening points for the cables at the appropriate locations. This structure includes several ballast tanks, which are initially empty so that the assembly has a slightly positive buoyancy. This structure is moved to the wind farm and sunk in the place where the floating platform (100) will be installed. This operation does not require great precision, since it is certain that the anchor points will be correctly positioned, regardless of the position in which the ring is on the seabed (5). When the floating platform (100) is placed in its installation site, it is sufficient to fasten the cables on the anchors for the floating platform (100) to be operational;

- Piles inserted in the seabed (5) may be used. This system is copied from the foundations of TLP type platforms. The seabed (5) is prepared and piles including the anchor points of the anchoring lines (200) are inserted. The fundamental difference with the TLP system is that the tensile stresses that must be withstood with the anchoring system of the present invention are much lower than on a TLP platform, in fact, for an equal installed power, the stresses are of the order of one fifth or less. This makes the preparation of the anchorage much cheaper and easier.

- Bottom weights (4) previously located on the seabed (5) may be used. Due to the low voltages of the cables, individual bottom weights (4) can be used which are located precisely on the seabed (5), on a pre-prepared esplanade. This is an intermediate solution between the anchoring ring (which is a very large structure but simple to place) and the use of piles (requiring certain preparation of the ground and placing the background weights (4) accurately).

Comparison of the anchoring system of the present invention with TLP (Tension Leg Platform) platforms: Apparently, floating platforms (100) with a TLP-type anchoring system serve the same purpose as a floating platform (100) with the anchoring system of the present invention. Their aim is to override the pitch/roll movement of the floating platform (100). However, the principle of operation of both is radically different and their kinematic and dynamic characteristics are also different, as can be seen in the following table:

| Characteristic | TLP Platform | SLP platform (anchoring system of the present invention) |
|---|---|---|
| Upright position | Almost constant, moves in an arc of circumference, with centre in the anchoring weights | Completely free, within the design range (the range depends on the length of the central sections) |

(continued)

| Characteristic | TLP Platform | SLP platform (anchoring system of the present invention) |
|---|---|---|
| Pitch angle | Theoretically null, it depends on the elasticity of the anchoring lines | Depends on the bottom section:<br>-Vertical: theoretically null<br>-Divergent: inverse controllable or zero |
| Design voltage in the cables | Very high | Moderate, less than $^1/_5$ of TLP platform voltages<br>Comparable to a traditional anchorage |
| Average voltage in the cables under static conditions | Grows with tide level and horizontal movements | Almost constant in any sea conditions, as long as the counterweight does not get too close to the platform |
| Possibility of loss of tension in the leeward cable. | Due to external bending moment<br>Due to low tides<br>Due to very large waves | Due to external bending moment<br>Due to very large waves |
| Bending moment at the base of the tower | Somewhat higher than an land windmill | May be less than that of a land windmill (divergent lines) |
| External appearance | Very high and slender platforms | Low-height, flattened platforms (any shape) |
| Environmental impact | High environmental impact, especially at low tide | Reduced environmental impact, in any condition |
| Geometric requirements of the hull | Small floatation area<br>None other relevant | None<br>It can have any shape |
| Moving parts | None | Almost the entire anchoring system . |
| Transport to operating position | Complex, needs special ships | Very simple, just a conventional tugboat |
| Installation | Very complex, requires positioning the bottom anchors with great precision | Very simple, it does not require conditioning of the ground, it is almost autonomous in its installation |
| Change of operational location | Almost impossible | Very simple, you just need a tugboat for the transport |

The figures of the present patent application are described and discussed below.

In all the figures, the depth at which the seabed (5) is located has been reduced, so that the images are more proportionate and easier to interpret. If the seabed were so close, it would not be worth using floating platforms (100), since it would be better if they were directly supported on the seabed (5). In actual projects, the counterweight (1) would also be proportionally deeper than shown in the figures.

A basic schematic of the anchoring lines (200) (according to the anchoring system of the international application PCT/IB2022/000334) is shown in Figure 1. An installation of this type consists of a floating platform (100) floating in the sea, fitted with an even number of anchoring lines (200) (the minimum is two anchoring lines (200) when only turning movement in one direction, e.g. pitching, is to be cancelled; the minimum is four anchoring lines (200) when pitch and roll are to be cancelled simultaneously). Each anchoring line (200) is composed of two sublines (200d, 200c), each of which consists of: an inner pulley (second rotary fixing means (2c) and, eventually, third rotary fixing means (2d)) and an outer pulley (first rotary fixing means (3)), which support an anchoring cable composed of three sections: a bottom section (8) reaching to a bottom weight (4) resting on the seabed (5); another central section (6) attached to the central counterweight (1), and; an intermediate section (7) joining the other two sections (6, 8). The central counterweight (1) is shared by all anchoring lines (200). The bottom section (8) may be divided into two sub-sections or portions, which are joined to an intermediate buoy (9); in this case, the lower part or first portion of this bottom section (8) is common to all the sublines (200d, 200c) hanging from the same overhanging structural arm (12). In the figure, two complete anchoring lines (200) are shown simultaneously, one by means of a continuous line (the one on the right arm) and the other (the one on the opposite arm) by means of a broken line.

Figure 1 corresponds to the arrangement of anchoring lines (200) of two opposing protruding structural arms (12) (since international application PCT/IB2022/000334 requires an even number of protruding structural arms (12)).

In Figure 2 the sublines (200d, 200c) of a single anchoring line (200) of the same anchoring system of Figure 1 have been depicted. Figure 2 shows more clearly the elements of the anchoring line (200) as well as the difference between the direct (dashed) subline and the crossover subline (solid line).

The bottom section (8) runs from the bottom weight (4) to an intermediate buoy (9) where it branches into the cables of each of the two sublines (200d, 200c) that reach the outer pulleys (first rotary fixing means (3)); this pulley is double (with the same axis of rotation). From there the two sections go to the inner pulleys:

- The intermediate section (7d) of the direct subline (200d) reaches the direct inner pulley (2d) and is directed by its central section (6d) directly towards the central counterweight (1) which is common to all the sublines (200d, 200c).

- The intermediate leg (7c) of the crossover subline (200c) passes to the opposite protruding structural arm (12), reaching the crossover inner pulley (2c), which is at the same distance from the central axis (300) as the direct inner pulley (2d); at this pulley it changes its name and is called the central section (6c) reaching the central counterweight (1).

The complete anchoring system (according to international application PCT/IB2022/000334) consists of an even number of lines as described in Figure 2, hanging from their respective protruding structural arms (12). In the rest position, the entire anchoring line (200) and all its elements are in the same plane and the intermediate section (7) crosses the hull or main structure (400) of the floating platform (100) at its upper part.

Figure 3 shows the basic schematic of the anchoring system of the present invention. This Figure 3 depicts (analogously to Figure 2) a single anchoring line (200) of an anchoring line (200). This anchoring line (200) includes a first subline (200d) (in this case, a direct subline (represented by dashed line)) and a second subline (200c) (in this case, a crossover subline (represented by solid line)). As can be seen, the scheme is very similar to the scheme of the international application PCT/IB2022/000334, but with a fundamental difference: at least one section of the second subline (200c) is not located in the anchoring plane defined by the central axis (300) of the platform and the bottom section (8) of the anchoring line in question.

A first part of the second subline (200c) does lie in the same anchoring plane as the first subline (200d), but close to the central axis (300) of the floating platform (100), it changes direction aided by one or more rotary guiding means (11) (intermediate support pulleys of the intermediate section (7)) and aligns with the vertical plane of the adjacent protruding structural arm (12) (in a floating platform (100) with three protruding structural arms (12) it is oriented at 120° to the first arm; if the floating platform (100) had five protruding structural arms (12), the angle between the two protruding structural arms (12) would be 72°).

The rest of the elements are the same, arranged in a similar way, but oriented in two different planes. The rotary guiding means (11) (intermediate pulley supporting the intermediate section (7)) can be split into two pulleys, positioned on the two adjacent protruding structural arms (12), to move the intermediate section (7) of the second subline (200c) away from the hull or main structure (400) of the floating platform (100), as can be seen in Figure 14 and Figure 15.

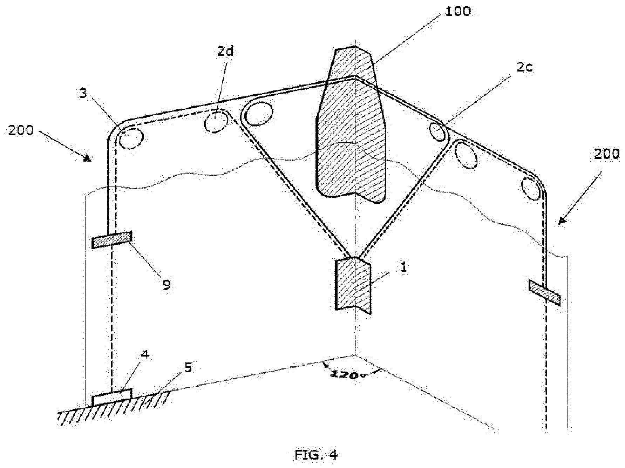

Figure 4 shows anchoring lines (200) supported by two adjacent or consecutive overhanging structural arms (12) together. It is a scheme analogous to Figure 1, but in this case Figure 4 appears folded 60° so that the anchoring lines (200) are held on the three protruding structural arms (12) of the floating platform (100). If analysed in detail (and strictly) it can be misleading, as in this image you can also see parts of the sublines of the third protruding structural arm (12), but it has the advantage of being more intuitive to get an idea of the anchoring system. In addition, each arm looks exactly as the real platform would look.

Figure 5 shows a schematic of the complete anchoring system of a floating platform (100) of three protruding structural arms (12), according to one embodiment of the anchoring system of the present invention. It includes all the elements described in Figures 3 and 4.

Figure 6 shows a diagram of the geometrical principle that regulates the lengths of each section of the anchoring lines (200) and justifies that the floating platform (100) always moves parallel to its initial position. The scheme corresponds to central anchoring sublines (as defined in ES 2629867 A2) and has been maintained for compatibility.

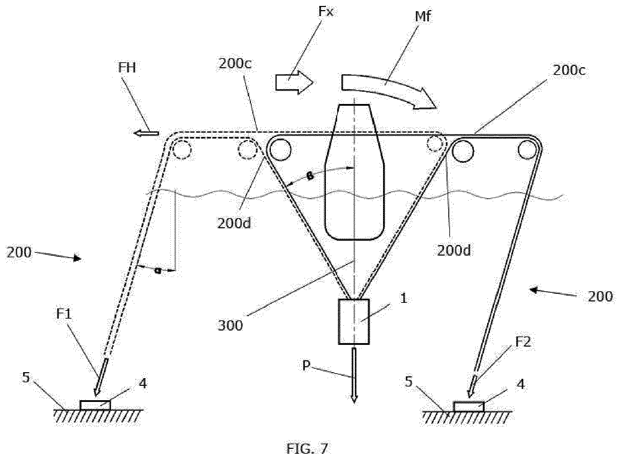

Figure 7 shows a diagram of the dynamic principle, with the forces acting on the cables of the anchoring lines (200) when the floating platform (100) is subjected to a force (Fx) and a bending moment (Mf) caused by external agents (wind, waves or sea currents). The sum of the stresses in all the anchoring lines (200) is always constant (equal to the apparent weight of the central counterweight (1), divided by the cosine of the angle $\beta$); the difference between the stresses of the lines is proportional to the applied bending moment and the horizontal force (FH) that the floating platform (100) is able to withstand is proportional to the sine of the angle ($\alpha$) of the anchoring lines (200) with the vertical. When the two leeward sublines are untensioned, the floating platform (100) loses horizontality (pitching or rolling movements appear).

Figure 8 and Figure 9 show a basic scheme of the anchoring system, similar to Figure 1, in which the intermediate buoys (9) have been removed, so that the bottom sections (8) of the direct sublines (8d) and of the crossover sublines (8c) reach the bottom weight (4) on the seabed (5). Figure 8 shows the floating platform (100) in its resting position and Figure 9 corresponds to the floating platform (100) when it has changed position (horizontal and vertical) due to the effect of wind and waves.

Figure 10 shows a scheme of operation of the anchoring system with parallel lines, in which the bottom sections (8) are vertical in their resting position (dashed lines); when the floating platform (100) moves (solid line), the deck of the floating platform (100) always remains horizontal. The position of the pulleys has been altered a little intentionally, to facilitate the interpretation of the diagram.

Figure 11 shows an operating diagram of the anchoring system with diverging lines, in which the bottom sections (8) do not go vertically down to the seabed (5), but their route forms an angle (A) with the vertical. When the floating platform (100) moves horizontally, it tilts windward. In the first approach it is as if it were rotating around the point of intersection of the two bottom sections (8). If the floating platform (100) is a marine wind turbine support, with a tower (13) and a wind turbine nacelle (14), the axial component of the weight of the nacelle (14) (due to the inclination of the tower (13)) can be made to exactly compensate the thrust of the wind on the blades of the rotor, so that the bending moment is annulled throughout the tower (13) of the wind turbine (and therefore the bending moments transmitted by the tower (13) to the floating platform (100)).

Figure 12 and Figure 13 show a first embodiment of the anchoring system according to the present invention.

Figure 12 and Figure 13 show a schematic diagram of the anchoring system (SLP or Soft Leg Platform) of a floating platform (100) with three anchoring lines (200). The second subline (200c) of each anchoring line (200) is a direct diagonal subline (without rotary guiding means (11), i.e., without intermediate pulleys supporting the intermediate section (7)).

Each anchoring line (200) consists of a first subline (200d) (in this case a direct subline), in which the direct inner pulley (third rotary fixing means (2d)) has been removed, and a second subline (200d) (in this case, a diagonal subline), with the crossover inner pulley (second rotary fixing means (2c)) located on another of the protruding structural arms (not shown) of the floating platform (100).

In Figures 12 and 13 any reference to the floating platform (100) has been deleted and only the anchoring lines (200), the central counterweight (1), the buoys (9) intermediate to the anchoring lines (200) and the bottom weights (4) have been shown.

Figure 12 represents a perspective view and Figure 13 represents a plan view of the anchoring system, according to this first embodiment. Only the direct anchor subline sections (6d, 7d and 8d) and the crossover anchor subline sections (6c, 7c, and 8c) have been labelled; the bottom sections (8c and 8d) are barely distinguishable in plan view, as they are almost vertical.

Figure 14 and Figure 15 show a second embodiment of the anchoring system that is the object of the present invention.

Figure 14 and Figure 15 show a schematic of the anchoring system (SLP) of a floating platform (100) with three anchoring lines (200). The second subline (200c) of each anchoring line (200) is a crossover subline passing through two rotary guiding means (11) (two intermediate pulleys for forwarding and supporting the intermediate sections (7)), so that said sections run parallel to the protruding structural arms (12) that support the inner pulleys (second rotary fixing means (2c) and, possibly, third rotary fixing means (2d) (not shown)) and the outer pulleys (first rotary fixing means (3)).

Figure 14 depicts a perspective view of this second embodiment of the anchoring system and Figure 15 depicts a plan view of this second embodiment of the anchoring system.

This second embodiment of the anchoring system is the preferred basic configuration for floating platforms (100) that are to serve as support for offshore wind turbines.

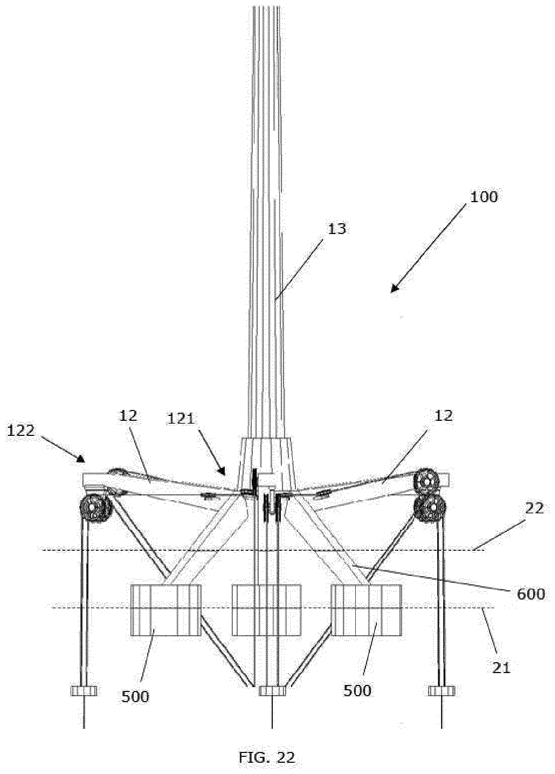

Figure 22, Figure 23 and Figure 24 show a floating platform (100) supporting an offshore wind turbine, according to this second embodiment of the invention.

Figure 16 and Figure 17 show a third embodiment of the anchoring system object of the present invention. It is a diagonal anchoring system.

An anchoring system for a floating platform (100) with six anchoring lines (200) is shown, wherein each anchoring line (200) comprises a first subline (200d) (or direct subline) and a second subline (200c) (or diagonal subline).

The intermediate section (7) of each second subline (diagonal subline) passes through a rotary guiding means (11) (intermediate pulley supporting the intermediate section (7)) located in proximity to the periphery of the floating platform (100) and configured to reorient the path of this intermediate section (7) (in this particular case to avoid the columns of the floating platform (100)). Although the figure refers to a system with an even number of arms, it would be exactly the same for 5 or for 7 arms, and is clearly different from the solution resulting from applying patent PCT/IB2022/000334.

Figure 18 and Figure 19 show a fourth embodiment of the anchoring system object of the present invention. It is a star crossover anchoring system. Although it looks very different, the scheme is the same as in Figures 16 and 17 in which the idlers have been moved from the periphery to the centre of the platform (keeping them at the same height).

An anchoring system for a floating platform (100) with six anchoring lines (200) is shown, wherein each anchoring line (200) comprises a first subline (200d) (or direct subline) and a second subline (200c) (or crossover subline).

The intermediate section (7) of each second subline (crossover subline) passes through two rotary guiding means (11) (intermediate pulleys supporting the intermediate section (7)) located in proximity to the central axis (300) of the floating platform (100) and configured to reorient the path of this intermediate section (7). (in this particular case to avoid the hull of the floating platform (100)).

The third and fourth embodiments of the anchoring system are suitable for leisure platforms with a large deck, where the anchoring system is below the superstructure. The direct lines do not have intermediate pulleys, because if there were, the inner crossover pulley (2c) would have to be much closer to the central axis (300) of the floating platform (100) (pulleys 2c and 2d have to be together), undoing the 'circular' effect of the intermediate cable sections (7).

A fifth embodiment of the anchoring system is shown in Figure 20 and Figure 21.

These Figures show a schematic of the anchoring system (CLP or Cross soft Leg Platform) for a floating platform (100) with three anchoring lines (200), in which there are no direct sublines and the two sublines (200d, 200c) of each protruding structural arm (12) (not shown) are diagonal sublines.

Figure 22, Figure 23 and Figure 24 depict a floating platform (100) supporting a wind turbine tower (13) (the nacelle (14) is not shown). This floating platform (100) is employed with an anchoring system according to the second embodiment of the invention.

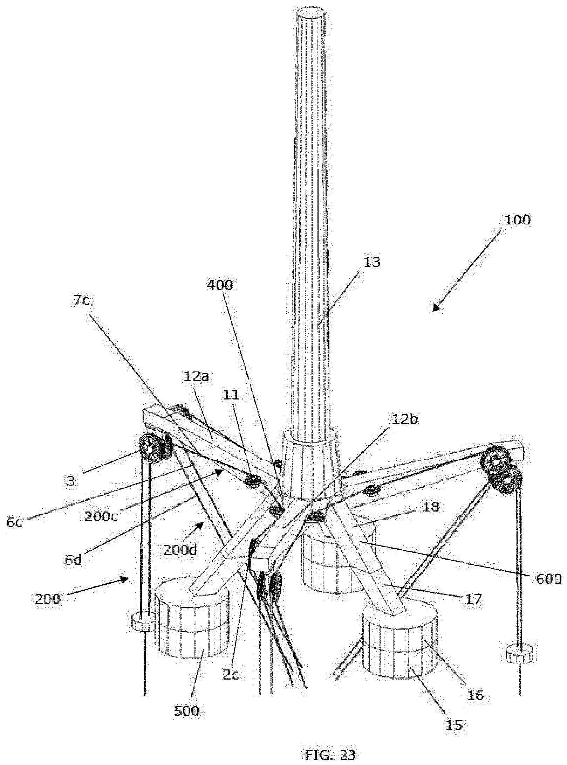

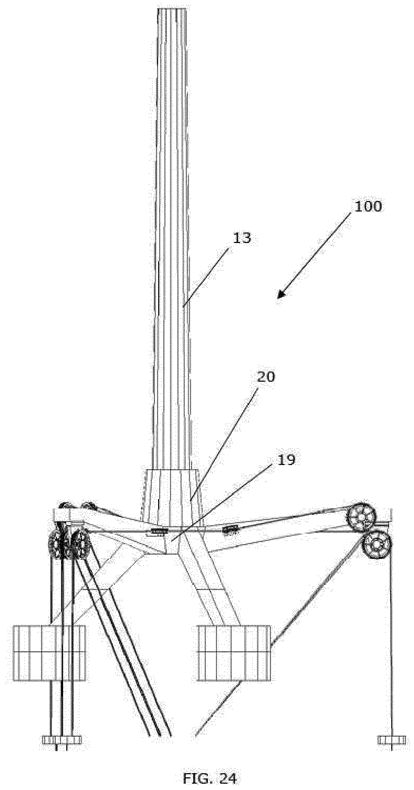

These Figures correspond to the preferred embodiment of a floating platform (100) supporting offshore wind turbines, which is stable in its ballast condition, with three anchoring lines (200). In these figures, the anchoring system (SLP) has been included complete with direct sublines (but without intermediate cable sections) and crossover sublines (with two rotary guiding means (11) (intermediate pulleys supporting the intermediate section (7)) in each crossover subline). The Figures depict three views of the platform: Figure 24 is a profile view of the assembly, Figure 22 is a front view, and Figure 23 is a perspective view of the assembly.

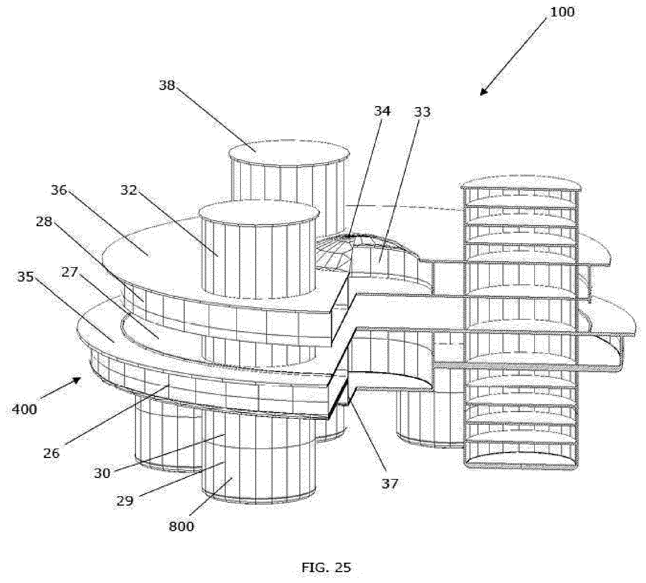

Figure 25, Figure 26, Figure 27 and Figure 28 depict a floating platform (100) intended for sports, recreational and/or marine leisure facilities.

The hull or main structure (400) is formed by six cylindrical columns (800), each of which has a submerged part (29) and an emerging part (30) above the operating draft (22) line. This emerging area (30) joins each column (800) to the first deck (26) of the hull of the floating platform (100).

This first deck (26) is formed by a disk, the roof of which forms the main deck (35) of the floating platform (100) and comprises an annular balcony perimeter of the second deck (27).

The columns (800) comprise extension sections (31) through the various between decks (26, 27, 28) to hold together the entire superstructure of the floating platform (100). Three of these columns (800) continue above the upper deck (36), forming three buildings (32) of accommodations for visitors to the floating platform (100).

The superstructure is formed by three decks (26, 27, 28).

The first deck (26) is the lowest, forming the resistant hull of the floating platform (100), which in its central part extends downward to form a large central room or lower enclosure (37).

The second deck (27) is totally diaphanous, with its glazed contour, although its panels are foldable (retractable) to leave the second deck (27) totally open to the exterior.

The third deck (28) is also enclosed (to ensure the structural strength of the platform) and in its central area there is another central room or upper enclosure (33) covered by a dome (34) of tinted glass.

The roofs (38) of the three upper buildings (32) are equipped as heliports.

The floating platform (100) is equipped with an anchoring system (SLP) of circular diagonal lines (according to the third embodiment) or star-shaped (according to the fourth embodiment).

Figure 25 shows a top perspective view of the floating platform (100), cut to ¾, to appreciate the interior layout of the floating platform (100). The view does not include the anchoring system.

Figure 26 shows a profile view of the platform, cut at ¾ (the sectioned part remains on the right), which includes the circular diagonal anchoring system (according to the third embodiment) (although some of its elements are partially hidden by the columns (800) forming the submerged hull of the floating platform (100)). The horizontal line shown in the drawing is the operating draft (22) or design buoyancy of the floating platform (100).

Figure 27 shows a bottom perspective view of the floating platform (100), cut to ¾, to appreciate the interior layout of the floating platform (100). The view includes the circular diagonal anchoring system (according to the third embodiment) and especially its interaction with the columns (800) of the hull. As can be seen, the diagonal sublines enclose the columns (800), to join at the central counterweight (1); the rotary guiding means (11) (intermediate pulleys) deflect the intermediate section (7) of the second sublines (200c) so that the columns (800) can be further apart from each other.

Figure 28 shows a bottom perspective view of the floating platform (100), analogous to Figure 27, but with the diagonal star anchoring system (according to the fourth embodiment of the anchoring system).

Although the proposed anchoring system is valid for any floating platform (100) (intended to support any type of structure), the present invention is especially indicated for two specific applications, as a support for offshore wind turbines and as a platform for offshore leisure. With regard to the object of the proposed patent (the anchoring system), the main difference between the two applications is the deck area of the floating platform (100), which causes the outer pulleys to hang from protruding structural arms (12) arranged radially, which protrude quite a bit from the deck of the floating platform (100), and on the platforms designed for marine leisure, causes the outer pulleys to hang from very short arms that protrude from the main deck (first deck (26) of the floating platform (100).

In the case of the anchoring system preferably intended for use with floating platforms (100) to serve as support for offshore wind turbines (according to the second proposed embodiment), the anchoring system comprises the following elements:

- Three anchoring lines (200), each of which is formed by two anchoring sublines (200c, 200d), each of the sublines (200d, 200c) consists of an anchoring cable hanging from an outer pulley (first rotary fixing means (3)) and another inner pulley (2c, 2d), which in turn hang from a protruding structural arm (12) that serves as a support for the anchoring lines (200). The bottom section (8) of the anchoring cable of all the sublines (of the same anchoring line/arm), is subject to a bottom weight (4) directly or through an intermediate buoy (9) and a common bottom section (first portion or lower portion of the bottom section (8)). The central section (6) of all of the anchoring lines (200) is subject to a centre counterweight (1) that is common to all of the anchoring lines (200). The crossover line (second subline (200c)) includes two rotary guiding means (11) (intermediate support pulleys of the intermediate section (7)), to divert the path of the intermediate section (7) of the second subline (200c), from the protruding structural arm (12) from which the outer pulleys (first rotary fixing means (3)) hang, to one of the other two protruding structural arms (12). Alternatively, the other anchoring systems described (SLP or CLP variants) could be used.

- Floating platform (100): its hull or main frame (400) is attached to three cylindrical floats or flotation elements (500) with a vertical axis arranged at the vertices of an equilateral triangle and spaced sufficiently far apart to allow the central counterweight (1) to fit in the centre of the platform with the necessary clearances. The floating elements (500) are attached to the hull or main structure (400) of the floating platform (100) by means of three 'legs' or inclined spokes (600) that coincide in a reinforced structural ring (19) located under the superstructure (20) of the floating platform (100), well above its operating draught (22). Also attached to this structural ring (19) are the three protruding structural arms (12) which hold the pulleys of the anchoring lines (200) (the outer pulleys (first rotary fixing means (3)) and the inner pulleys (second rotary fixing means (2c) and third rotary fixing means (2d) if any). Above this reinforced structural ring (19) is a superstructure (20) on which the tower (13) of the wind turbine is supported. In the ballast condition, the waterline (21) is located approximately midway between the floating elements (500) (which have a submerged area (15) and an emerging area (16)) and the floating platform (100) is stable in its own right. In the operating condition, the operating draft (22) is located halfway up the spokes (600) (which have a submerged radius zone in operating condition (17) and a never submerged zone (18)) and the flotation elements (500) are fully submerged.

- Central counterweight (1): a vertical axis cylindrical tank, weighted, but with a volume such that completely empty it has a positive buoyancy of the order of 10% of its volume. Internally it is divided into several ballast tanks or flood chambers that can be filled or emptied independently. With one of its chambers flooded, it has a slightly negative buoyancy. On its roof, there are three pairs of anchors to which the ends of the central sections (6) of all the sublines (200c, 200d) of the anchoring lines (200) are fastened.

- Wind turbine: composed of a wind turbine tower (13) that rests on the main structure (400) of the floating platform (100) (on the superstructure (20) that is on the reinforced structural ring (19)) where the protruding structural arms (12) and the upper part of the spokes (600) are fastened. The tower (13) holds the nacelle (14), where the wind turbine itself is located. It is a commercial component, so it is not described in more detail.

- The submerged flotation elements (500) are accessible (for maintenance operations) through stairs located inside the spokes (600) of the floating platform (100). Said legs or spokes (600) are accessed through watertight doors located on the corresponding rectangular faces of the reinforced structural ring (19). This floating platform (100) has two modes of operation:

    ◦ The transport (or ballast) condition, in which all its floodable chambers are empty and all the anchoring lines (200) are collected and float freely with no more constraints than the cable that joins them to the tugboat. In this condition, the floating platform (100) is stable on its own.

∘ The operating (or design) condition, in which any of its ballast tanks or flood chambers is partially filled to get the platform to float in its design or operating draft (22). The floating platform (100) is connected to the central counterweight (1) via the central sections (6) of all the anchoring lines (200) and to the seabed (5) via the bottom sections (8) of the anchoring lines (200). In this condition, the floating platform (100) has no stability on its own and depends solely on the stability provided by the anchoring lines (200).

Figures 22 to 24 show three views of this floating platform (100) (in which its main elements have been identified), with the anchoring system according to the second proposed embodiment.

In the case of the anchoring system preferably intended to be used with floating platforms (100) to serve as a support for maritime leisure activities, the main requirement of this embodiment is that it needs a lot of habitable surface and must maintain a very low level of movements, since most of the people who visit it are not professionals of the sea and are not used to the movements of marine artifacts.

This floating platform (100) for maritime leisure activities (shown in Figures 25 to 28) are preferably employed with anchoring systems (SLP) according to the third or fourth proposed embodiments.

The main elements of this floating platform with its corresponding anchoring system include:

- Six anchoring lines (200), with the intermediate sections (7) of the second sublines (200c) (diagonal circle sublines in the third embodiment or star-crossover sublines in the fourth embodiment) reoriented by means of rotary guiding means (11) (intermediate support pulleys of the intermediate section (7)) to separate them from the columns (800) forming the hull or main structure (400) of the floating platform (100). In the circle anchorage (third embodiment), the intermediate sections (7) of the second sublines (200c) are deflected outward and in the star anchorage (fourth embodiment) the intermediate sections (7) of the second sublines (200c) are deflected inward.

- A hull or main structure (400) consisting of six columns (800), each of which has a submerged part (29) and an emerging part (30) that is above the operating draft (22). The central sections (6) of all anchoring lines (200) pass through the gaps between the columns (800). At the bottom of the columns (800) are the essential equipment of the floating platform (100), considered as a ship, i.e. generators, air conditioning, watermakers, ship's services, pumps, miscellaneous equipment, etc. The higher levels or floors include the crew quarters.

- Three of the columns (800) forming the hull or main structure (400), continue upward, supporting the various decks (26, 27, 28) forming the superstructure of the floating platform (100); the other three columns (800) terminate at the main deck (35). In the central part of the columns (800) there are lifts and stairs and the entire contour is occupied by accommodations, arranged radially around the lift/stair trunk.

- A first circular deck (26) forms the structural hull of the floating platform (100) and is dedicated to common spaces of all kinds, such as stores, restaurants, kitchens, commercial or leisure premises. In the central area there is a lower enclosure (37) with a room with a large free height for theatre, cinema, exhibitions, museum activities, etc.

- A second diaphanous, glazed deck (27), whose contour can be opened so that all the interior space is connected to the exterior, includes walking areas, restaurants and outdoor cafés, gardens, fountains, etc. Around it, on the main deck (35) there is a ring that can be fitted out as a solarium or as lookouts.

- A third enclosed deck (28), supported by the three columns (800) forming the buildings (32) of accommodation. The content of this third deck (28) depends on the activities to which the floating platform (100) is to be used for. In the centre of this third deck (28) there is an upper enclosure (33) with a room, covered by a glass dome (34), especially for social gatherings of the people accommodated on the floating platform (100). Depending on the use of the floating platform (100), the upper enclosure (33) room can be fitted out as a swimming pool.

- Above the third deck (28) is the upper deck (36), fitted out as a solarium, walking area or sports areas, especially if the upper enclosure (33) room is a swimming pool. Around it are the three columns (800) dedicated to visitor accommodation, whose roofs are used as helicopter landing pads (heliports (38)).

Four views of this floating platform (100) are shown in Figures 25 to 28: Figure 25 is a perspective view of the floating platform (100) sectioned at ¾ without the anchoring system; Figure 26 is a profile view, which also includes the upper part of the anchoring system (from the counterweight (1) upwards); Figure 27 is a bottom perspective view, in which the circular diagonal anchoring lines (200) can be seen in more detail; Figure 28 is a bottom perspective view, in which the intermediate sections (7) of the star-shaped diagonal anchoring lines (200) can be seen in more detail. Although all images and descriptions have been made on a 6-column model (with six anchoring lines), it is perfectly valid for a platform with 5 or 7 columns, the six-column version has been chosen for purely aesthetic reasons.

Thus, the anchoring system for marine floating platforms (100), object of the present invention, comprises three or more anchoring lines (200), arranged radially around a common point or central axis (300) of the floating platform (100), each of which is formed by two anchoring sublines (200d, 200c) comprising the following elements:

-    An inner pulley (second rotary fixing means (2c) and, possibly, third rotary fixing means (2d)) and an outer pulley (first rotary fixing means (3)), located at the top of the anchoring line (200); they may be single (with a single sheave) or multiple (with several overlapping parallel sheaves).

-    A central counterweight (1) common to all anchoring lines (200), located below the point of intersection of all anchoring lines (200), with several ballast tanks (floodable chambers), such that, when the ballast tanks of the central counterweight (1) are empty, has a small positive buoyancy (less than 20% of the total volume of the counterweight (1)) and when all the ballast tanks of the central counterweight (1) are flooded, has a large apparent weight (greater than 15% of the total displacement of the floating platform (100)).

-    An anchoring ring common to all anchoring lines (200), or several anchoring weights (4) (one for each anchoring line (200)), with several ballast tanks such that, when the ballast tanks of the anchoring ring are empty, it has a small positive buoyancy (less than 20% of the total volume of the anchoring ring) and when the ballast tanks of the anchoring ring are fully flooded, it has a very large apparent weight (greater than 15% of the total displacement of the floating platform (100)). Under the operation condition, the anchoring ring rests on the seabed (5) and performs the functions of the anchor of a conventional vessel, preventing wind, sea currents or waves from dragging the floating platform (100). In some applications, it can be replaced by a number of conventional seabed anchorages (5), to which the anchoring system cables are attached.

-    An anchoring cable, which connects the central counterweight (1) to the anchoring ring (or to each of the bottom weights (4) or anchorages) and which is supported by the pulley(s) inside (second rotary fixing means (2c) and, possibly, third rotary fixing means (2d)) and outside (first rotary fixing means (3)) of each anchoring line (200), divided virtually into three zones or sections: the central section (6) of the anchoring line (200), extending from the central counterweight (1) to the inner pulley (second rotary fixing means (2c) or, possibly, third rotary fixing means (2d)) of that anchoring line (200); the intermediate section (7) of the anchoring line (200) between the inner pulley (second rotary fixing means (2c) or possibly third rotary fixing means (2d)) and the outer pulley (first rotary fixing means (3)), and; the bottom section (8) of the anchoring line (200) from the outer pulley (first rotary fixing means (3)) to the anchoring ring or bottom weight (4).

-    One or more intermediate pulleys (rotary guiding means (11)), supporting the intermediate section (7) of the cable or anchoring line (200), intercalated between the inner pulley (second rotary fixing means (2c) or, eventually, third rotary fixing means (2d)) and the outer pulley (first rotary fixing means (3)), whose main mission is to change the travel of said intermediate section (7). A difference with other anchoring systems is that the intermediate section (7) of the anchoring line (200) is not straight and runs from the outgoing structural arm (12) of one anchoring line (200) to the outgoing structural arm (12) of the nearest anchoring line (200) (located in a plane oriented at 120° or 72° depending on the total number of outgoing structural arms (12)).

-    A protruding structural arm (12) supporting the anchoring line (200), supported (or embedded) in the deck or hull or superstructure (main structure (400) of the floating platform (100), from which the following hang: the outer pulley, the inner pulley and the intermediate support pulleys of the intermediate section, if any. The floating platform (100) may have an odd number of protruding structural arms (12).

As auxiliary elements, each anchoring line (200) may also include any of the following elements:

-    An intermediate buoy (9) sandwiched in the bottom section (8) of the anchoring lines (200). If present, it is connected to the bottom weight (4) by means of another cable segment.

It also includes other auxiliary elements, common to conventional anchoring systems and which help the installation/uninstallation manoeuvre of the floating platform (100) in its place of operation, such as winches, pinwheels, bollards or other elements typical of any traditional anchoring system.

The anchoring system comprises, for each anchoring line (200), a first subline (200d) and a second subline (200c). The first subline can be a direct or diagonal subline. The second subline can be a crossover subline or a diagonal subline. In either case, the second subline comprises an inner pulley (second rotary fixing means (2c)) which is located outside the plane (anchoring plane) defined by the central counterweight (1) (passing through the central axis (300)), the bottom weight (4) and the outer pulley (first rotary fixing means (3)) (where the bottom weight (4) and the outer pulley are connected by means of the bottom section (8) of the anchoring line).

In the anchoring system according to its fifth embodiment (or "CLP" system), each anchoring line (200) has two diagonal sublines, whose inner pulleys (second rotary fixing means (2c)) are located symmetrically to each other, with respect to the anchoring plane defined by the central counterweight (1), the bottom weight (4) and the outer pulley (first rotary fixing means (3)).

According to a possible embodiment of the anchoring system, in the design position, at rest and with calm sea, the bottom sections (8) of all the sublines (200d, 200c) of each anchoring line (200) are vertical (and parallel to each other).

Alternatively to what is mentioned in the previous paragraph, the bottom section (8) of all the sublines (200d, 200c) of each anchoring line (200) may be slightly divergent, i.e. the anchoring point of the anchoring cable or line (200) on the bottom weights (4) is more horizontally separated from the central counterweight (1) than the outer pulley (first rotary fixing means (3)).

The floating platform (100), when used as a support for wind turbines, may comprise at least the following elements:

- A hull or main structure (400) partially submerged with any geometry.

- A tower (13) supporting a marine wind turbine, located just above the hull of the floating platform (100).

- A complete marinised wind turbine, the nacelle (14) of which is installed on top of the corresponding tower (13).

- A central counterweight (1), located on the central axis (300) of symmetry of the floating platform (100), hanging from the central sections (6) of all the anchoring lines (200). Inside this there are a number of ballast tanks (or flood chambers), which comply with the following restrictions: With all ballast tanks empty, the central counterweight (1) has a slightly positive buoyancy (it floats). With one or several of the tanks flooded, the buoyancy of the central counterweight (1) is slightly negative (it sinks). With all ballast tanks flooded, the apparent weight of the central counterweight (1) is large (at least 15% of the total weight of the floating platform (100)).

- Three or more protruding structural arms (12), which serve to support the anchoring lines (200), arranged radially around the central axis (300) of symmetry of the hull or main structure (400) of the floating platform (100). Each anchoring line (200) is formed by two sublines (first subline (200d) and second subline (200c)) (which can be direct, crossover or diagonal sublines). Each subline (200d, 200c) can be single (single cable, with single sheave pulleys) or multiple (multiple cables and multiple sheave pulleys, mounted on the same axis).

The hull or main structure (400) of the floating platform (100) has two main loading conditions, a transport condition, in which all its ballast tanks are empty and free floating with a characteristic floating line (21) and an operating condition, in which all anchoring lines (200) are connected to the seabed (5) and support the net weight of the central counterweight (1); any of its ballast tanks may be completely or partially filled so that its floating line (21) coincides with the operating draught (22) or design draught.

This floating platform (100) for supporting offshore wind turbines may be self-stable, wherein its hull may comprise the following elements:

- Three cylindrical floats or flotation elements (500), separated from the central axis (300) of the floating platform (100), distributed uniformly throughout its surroundings. The ballast waterline (21) is located halfway up these floats, defining two volumes, the submerged area (15) and the emerging area (16). In ballast the surface of its flotation gives it all the stability it needs for transfer operations. In the operating condition, the floats are fully submerged.

- Three or five legs or spokes (600), approximately prismatic in shape, inclined with respect to the vertical, connecting each of the floats to the rest of the floating platform (100). In the ballast condition they are completely out of the water, but in the operating condition, they have a submerged radius zone in the operating condition (17) and a never submerged zone (18) above the operating draught (22). In the operation (or design) condition the floating platform (100) has no stability *per se*;

- Three or five protruding structural arms (12) arranged radially, approximately horizontal, which serve to support the pulleys of the anchoring system;

- A strong structural ring (19) at the base of the superstructure, to which are attached the legs or spokes (600) that go to the floats (flotation elements (500)) and the protruding structural arms (12) that support the anchoring system.

- A superstructure (20) on the structural ring (19), which serves as a base for the tower (13) of the wind turbine and inside which the electrical equipment of the wind turbine or the electrical connection systems with the rest of the wind turbines of the wind farm can be located.

- A tower (13) and a wind turbine, as described above.

As described, this anchoring system may include three or five complete anchoring lines (200), one on each protruding structural arm (12), with a central counterweight (1) and its sublines (200d, 200c) (direct, crossover and diagonal).

The floating platform (100) can be used to support structures intended for marine leisure or tourism, including sporting activities.

When used as a support for marine leisure structures, the floating platform (100) may comprise intermediate pulleys (rotary guiding means (11)) for the support of the intermediate section (7), which deflect the intermediate sections (7) of the cable from all diagonal or crossover sublines and give them the appearance of a circular or star-shaped line.

The system includes a high number of anchoring lines (200) (five lines or more) and is installed on large marine leisure platforms.

All pulleys hang from the bottom of the first deck (26) of the floating platform (100), so that it does not employ protruding structural arms (12) for this task. All central sections (6) of all anchoring sublines (200d, 200c) are joined at the central counterweight (1).

This anchoring system (known as "SLP") may comprise six anchoring lines (200) and, additionally, may comprise the following elements:

- A hull or main structure (400) consisting of six columns (800), each of which has a submerged part (29) and an emerging part (30) that is above the design buoyancy or operating draft (22); through the gaps between the columns (800) pass the central sections (6) of all the anchoring lines (200). At the bottom of the columns (800) are the essential equipment of the floating platform (100), considered as a ship, i.e. generators, air conditioning, watermakers, ship's services, pumps, miscellaneous equipment, etc. The higher levels or floors include the crew quarters.

- Three of the columns (800) forming the hull continue upward, supporting the various decks (26, 27, 28) forming the superstructure of the floating platform (100); the other three columns (800) end at the main deck (35). In the central part of the columns (800) there are lifts and stairs and the entire contour is occupied by accommodations, arranged radially around the lift/stair trunk.

- A first circular deck (26) forms the structural hull of the floating platform (100) and is dedicated to common spaces of all kinds, such as stores, restaurants, kitchens, commercial or leisure premises. In the central area there is a lower enclosure (37) with a room with a greater free height for theatre, cinema, exhibitions, museum activities, etc.

- A second diaphanous, glazed deck (27), whose contour can be opened so that all the interior space is connected to the exterior, includes walking areas, restaurants and outdoor cafés, gardens, fountains, etc. Around it, on the main deck (35) there is a ring that can be fitted out as a solarium, walking areas or lookouts.

- A third enclosed deck (28), supported by the three columns (800) forming the buildings (32) of accommodation. The content of this third deck (28) depends on the activities to which the floating platform (100) is to be used for. In the centre of this third deck (28) there is an upper enclosure (33) with a room, covered by a glass dome (34), especially for social gatherings of the people accommodated on the floating platform (100). Depending on the use of the floating platform (100), the upper enclosure (33) room can be enabled as a swimming pool, accessible from the upper deck (36).

- Above the third deck (28) is the upper deck (36), fitted out as a solarium, walking area or sports areas, especially if the upper enclosure (33) room is a swimming pool. Around it are the three columns (800) dedicated to visitor accommodation, whose roofs are used as helicopter landing pads (heliports (38)).

Although all the description and figures correspond to a six-line anchoring system with six floats, the platform could have five or seven lines, changing the number of floats and slightly modifying the description of the decks.

**Claims**

1. An anchoring system comprising a floating platform (100) and at least three anchoring lines (200), configured to secure or anchor the floating platform (100) to the seabed (5) by means of at least one bottom section (8) of each anchoring line (200), wherein each anchoring line (200) also comprises a central section (6) attached to a counterweight (1), wherein the anchoring system comprises at least one first rotary fixing means (3) for each anchoring line (200), wherein each first rotary fixing means (3) is attached to a first point of the floating platform (100) and is configured to attach each anchoring line (200) to the floating platform (100) at said first point of the floating platform (100), allowing the anchoring line (200) to slide along said first rotary fixing means (3), wherein each anchoring line (200) comprises at least a first subline (200d) and a second subline (200c), each comprising its own anchoring cable or chain, wherein a central axis (300) of the floating platform (100) defines together with the bottom section (8) of each anchoring line (200) an anchoring plane of each anchoring line (200), wherein the system comprises at least one second rotary fixing means (2c) for each anchoring line (200), wherein each second rotary fixing means (2c) is fixed to a second point of the floating platform (100) and is configured to fix a subline (200d, 200c) of each anchoring line (200) to the floating platform (100) at said second point of the floating platform (100) allowing said subline (200d, 200c) to slide along said second rotary fixing means (2c), in such a way that said subline (200d, 200c) comprises an intermediate section (7) between said first rotary fixing means (3) and said second rotary fixing means (2c) and wherein said subline (200d, 200c) runs from the first rotary fixing means (3) to the counterweight (1) sliding along the second rotary fixing means (2c), **characterized in that** the at least one second rotary fixing means (2c) of each anchoring line (200) does not lie within the anchoring plane of said anchoring line (200).

2. Anchoring system according to Claim 1, **characterized in that** the first subline (200d) of each anchoring line (200) is wholly comprised in the anchoring plane of said anchoring line (200), wherein the at least one first rotary fixing means (3) of each anchoring line (200) is fixed to the floating platform (100) in correspondence with a first point located at a periphery of the floating platform (100).

3. Anchoring system according to Claim 2, **characterized in that** the at least one second rotary fixing means (2c) is fixed to the floating platform (100) at a second point also located on the periphery of the floating platform (100).

4. Anchoring system according to Claim 2 or 3, **characterized in that** for each anchoring line (200), the intermediate section (7) of the second subline (200c) runs between the first rotary fixing means (3) and the second rotary fixing means (2c) passing through at least one rotary guiding means (11) located in proximity to the central axis (300) of the floating platform (100).

5. Anchoring system according to Claim 4, **characterized in that** the intermediate section (7) of the second subline (200c) runs between the first rotary fixing means (3) and the second rotary fixing means (2c) passing through at least two rotary guiding means (11) located in proximity to the central axis (300) of the floating platform (100).

6. Anchoring system according to Claim 2 or 3, **characterized in that** for each anchoring line (200), the intermediate section (7) of the second subline (200c) runs between the first rotary fixing means (3) and the second rotary fixing means (2c) in a straight line.

7. Anchoring system according to Claim 2 or 3, **characterized in that** the intermediate section (7) of the second subline (200c) runs between the first rotary fixing means (3) and the second rotary fixing means (2c) passing through at least one rotary guiding means (11) located in correspondence with the periphery of the floating platform (100).

8. Anchoring system according to any one of the preceding claims, **characterized in that** the second rotary fixing mean (2c) of each anchoring line (200) is attached to the floating platform (100) at a point located in proximity to the first rotary fixing mean (3) of an adjacent anchoring line (200).

9. An anchoring system according to any of the preceding claims, **characterized in that** the first subline (200d) of each anchoring line (200) is fully comprised in the anchoring plane of said anchoring line (200), wherein the anchoring system comprises at least one third rotary fixing means (2d) per anchoring line (200), wherein each third rotary fixing means (2d) is attached to a third point of the floating platform (100) and is configured to attach the first subline (200d) to the floating platform (100) at said third point of the floating platform (100) allowing the first subline (200d) to slide along said third rotary fixing means (2d), so that each first subline (200d) runs from the first rotary fixing means (3) to the counterweight (1) passing and sliding along the third rotary fixing means (2d).

**10.** Anchoring system according to Claim 1, **characterized in that** it comprises a second rotary fixing means (2c) for each anchoring subline (200d, 200c) of each anchoring line (200), such that both the first subline (200d) and the second subline (200c) respectively comprise an intermediate section (7) between the first rotary fixing means (3) and the corresponding second rotary fixing means (2c) and wherein each subline (200d, 200c) runs from the first rotary fixing means (3) to the counterweight (1) sliding along the corresponding second rotary fixing means (2c).

**11.** Anchoring system according to Claim 10, **characterized in that** the intermediate section (7) of each subline (200d, 200c) runs between the first rotary fixing means (3) and the second rotary fixing means (2c) in a straight line.

**12.** Anchoring system according to any one of the preceding claims, **characterized in that** the counterweight (1) comprises at least one floodable chamber.

**13.** Anchoring system according to any of the preceding claims, **characterized in that** each bottom section (8) of each anchoring line (200) comprises a buoy (9) that divides the bottom section (8) into a first portion that runs between the seabed (5) and the buoy (9) and a second portion that runs between the buoy (9) and the at least one first rotary fixing means (3).

**14.** Anchoring system according to any one of claims 3 to 5, **characterized in that** the floating platform (100) comprises as many protruding structural arms (12) as there are anchoring lines (200), wherein each protruding structural arm (12) is attached to a main structure (400) of the floating platform (100), wherein each protruding structural arm (12) runs radially from a first end (121) attached to the main structure (400) of the floating platform (1) to a second end (122) protruding outwardly from the floating platform (1), wherein the at least one first rotary fixing means (3) of each anchoring line (200) is attached to the floating platform (100) in correspondence with the second end (122) of a first arm (12a), and wherein the at least one second rotary fixing means (2c) is attached to the floating platform (100) at a point in correspondence with a second arm (12b).

**15.** Anchoring system according to Claim 14, **characterized in that** the at least one second rotary fixing means (2c) is fixed to the floating platform (100) at a point located in correspondence with a second end (122) of the second arm (12b).

**16.** Anchoring system according to Claim 14 or 15, **characterized in that** the main structure (400) of the floating platform (100) comprises a geometry in the form of a cylindrical, conical or pyramidal shaft.

**17.** Anchoring system according to Claim 16, **characterized in that** it comprises a plurality of spokes (600) connected to the main structure (400), where at each free end of each spoke (600) there is a flotation element (500).

**18.** Anchoring system according to Claim 17, **characterized in that** the flotation elements (500) comprise at least one floodable chamber.

**19.** Anchoring system according to Claim 16, **characterized in that** the main structure (400) comprises at least one flotation element (500).

**20.** Anchoring system according to Claim 19, **characterized in that** the at least one flotation element (500) comprises at least one floodable chamber.

**21.** Anchoring system according to any one of claims 2 to 13, **characterized in that** the floating platform (100) comprises a main structure (400) with three decks (26, 27, 28), wherein rotatable fastening means (3, 2c, 2d) and rotatable guiding means (11) are attached to the floating platform (100) at points under a first deck (26), wherein the main structure (400) comprises six columns (800) protruding under the first deck (26) and configured to be partially submerged, wherein the six columns (800) traverse a second deck (27) and a third deck (28), and wherein three of the six columns project above the third deck (27) onto an upper deck (36), wherein the second deck (27) comprises a glazed perimeter surface capable of unfolding and retracting, with a perimeter annular balcony protruding beyond the glazed perimeter surface, wherein a domed upper enclosure (33) projects above the third deck (27) in correspondence with the centre of the third deck (27), and wherein a lower enclosure (37) projects below the first deck (26) in correspondence with the centre of the first deck (26).

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

FIG. 21

FIG. 22

FIG. 23

FIG. 24

FIG. 25

FIG. 26

FIG. 27

FIG. 28

## INTERNATIONAL SEARCH REPORT

| International application No. |
| --- |
| PCT/ES2022/070466 |

### A. CLASSIFICATION OF SUBJECT MATTER

See extra sheet

According to International Patent Classification (IPC) or to both national classification and IPC

### B. FIELDS SEARCHED

Minimum documentation searched (classification system followed by classification symbols)
E02D, B63B, F03D

Documentation searched other than minimum documentation to the extent that such documents are included in the fields searched

Electronic data base consulted during the international search (name of data base and, where practicable, search terms used)

EPODOC, INVENES

### C. DOCUMENTS CONSIDERED TO BE RELEVANT

| Category* | Citation of document, with indication, where appropriate, of the relevant passages | Relevant to claim No. |
| --- | --- | --- |
| A | ES 2629867 A2 (GARCÍA) 16/08/2017; pages 11 - 14, 28 - 30; figures 5, 10 - 13, 23 - 28. | 1-4, 9, 12, 14, 16, 19-21 |
| A | US 2019/0315438 A1 (PRASAD et al.) 17/10/2019; the whole document. | 1, 2, 9, 16 |
| A | US 2986889 A (LUDWIG) 06/06/1961; columns 4 - 8, 10; figures 1 - 5, 12. | 1, 2, 9 |
| A | US 2012/0121340 A1 (PAO) 17/05/2012. | |
| A | US 2019/0078556 A1 (STIESDAL) 14/03/2019. | |
| A | US 4437794 A (GRIMSLEY et al.) 20/03/1984. | |

☐ Further documents are listed in the continuation of Box C.  ☒ See patent family annex.

| * | Special categories of cited documents: | | "T" | later document published after the international filing date or priority date and not in conflict with the application but cited to understand the principle or theory underlying the invention |
| --- | --- | --- | --- | --- |
| "A" | document defining the general state of the art which is not considered to be of particular relevance. | | | |
| "E" | earlier document but published on or after the international filing date | | | |
| "L" | document which may throw doubts on priority claim(s) or which is cited to establish the publication date of another citation or other special reason (as specified) | | "X" | document of particular relevance; the claimed invention cannot be considered novel or cannot be considered to involve an inventive step when the document is taken alone |
| "O" | document referring to an oral disclosure use, exhibition, or other means. | | "Y" | document of particular relevance; the claimed invention cannot be considered to involve an inventive step when the document is combined with one or more other documents , such combination being obvious to a person skilled in the art |
| "P" | document published prior to the international filing date but later than the priority date claimed | | | |
| | | | "&" | document member of the same patent family |

| Date of the actual completion of the international search | Date of mailing of the international search report |
| --- | --- |
| 04/10/2022 | (05/10/2022) |
| Name and mailing address of the ISA/<br><br>OFICINA ESPAÑOLA DE PATENTES Y MARCAS<br>Paseo de la Castellana, 75 - 28071 Madrid (Spain)<br>Facsimile No.: 91 349 53 04 | Authorized officer<br>L. Dueñas Campo<br><br><br>Telephone No. 91 3495342 |

Form PCT/ISA/210 (second sheet) (January 2015)

<table>
<tr><td>**INTERNATIONAL SEARCH REPORT**</td><td>International application No.<br><br>PCT/ES2022/070466</td></tr>
</table>

CLASSIFICATION OF SUBJECT MATTER

*E02D27/42* (2006.01)
*B63B21/50* (2006.01)
*B63B21/20* (2006.01)
*B63B35/44* (2006.01)
*F03D13/25* (2016.01)
*B63B39/00* (2006.01)

Form PCT/ISA/210 (extra sheet) (January 2015)

EP 4 411 074 A1

## INTERNATIONAL SEARCH REPORT

Information on patent family members

International application No.

PCT/ES2022/070466

| Patent document cited in the search report | Publication date | Patent family member(s) | Publication date |
|---|---|---|---|
| ES 2629867 A2 | 16.08.2017 | NONE | |
| US 2019/0315438 A1 | 17.10.2019 | US10507894 B2 | 17.12.2019 |
| US 2986889 A | 06.06.1961 | NONE | |
| US 2012/0121340 A1 | 17.05.2012 | BRPI0816770 A2 | 12.01.2016 |
| | | JP2010539378 A | 16.12.2010 |
| | | CN101939537 A | 05.01.2011 |
| | | MX2010002854 A | 14.09.2010 |
| | | KR20100087095 A | 03.08.2010 |
| | | CA2699380 A1 | 19.03.2009 |
| | | US2009072544 A1 | 19.03.2009 |
| | | US8118538 B2 | 21.02.2012 |
| | | EP2201244 A2 | 30.06.2010 |
| | | WO2009036107 A2 | 19.03.2009 |
| | | WO2009036107 A3 | 20.05.2010 |
| US 2019/0078556 A1 | 14.03.2019 | JP2019509217 A | 04.04.2019 |
| | | US11208987 B2 | 28.12.2021 |
| | | CN109154280 A | 04.01.2019 |
| | | EP3430259 A1 | 23.01.2019 |
| | | EP3430259 A4 | 16.10.2019 |
| | | WO2017157399 A1 | 21.09.2017 |
| US 4437794 A | 20.03.1984 | US4645379 A | 24.02.1987 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2743170 A1
- ES 2629867 A2

- WO 2022000334 A